(19)

Europäisches Patentamt

European Patent Office

Office européen des brevets

(11)  **EP 4 306 210 A1**

(12)  # EUROPEAN PATENT APPLICATION

(43) Date of publication:
**17.01.2024  Bulletin 2024/03**

(21) Application number: **22184534.0**

(22) Date of filing: **12.07.2022**

(51) International Patent Classification (IPC):
*B01J 21/18* (2006.01)      *B01J 23/02* (2006.01)
*B01J 23/62* (2006.01)      *B01J 35/02* (2006.01)
*B01J 35/10* (2006.01)      *B01J 37/03* (2006.01)
*B01J 37/08* (2006.01)      *B01J 37/12* (2006.01)
*B01J 37/14* (2006.01)      *B01J 37/16* (2006.01)
*B01J 37/18* (2006.01)

(52) Cooperative Patent Classification (CPC):
**B01J 23/628; B01J 21/18; B01J 23/02;
B01J 35/023; B01J 35/1014; B01J 37/031;
B01J 37/035; B01J 37/038; B01J 37/08;
B01J 37/12; B01J 37/14; B01J 37/16; B01J 37/18**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Omya International AG
4665 Oftringen (CH)**

(72) Inventors:
• **FTOUNI, Jamal
4800 Zofingen (CH)**
• **DUTTA CHOWDHURY, Abhishek
Wuhan, Hubei, 430072 (CN)**

(74) Representative: **Maiwald GmbH
Elisenhof
Elisenstraße 3
80335 München (DE)**

(54)  **HIGH SURFACE AREA PCC AS A CATALYST CARRIER FOR PLATINUM COMPOUNDS**

(57)    The present invention refers to a catalytic system comprising a platinum compound on a solid carrier, wherein the content of the platinum species on the surface of the solid carrier is from 0.1 to 15 wt.-%, based on the dry weight of the solid carrier. The solid carrier is a precipitated calcium carbonate (PCC) and has a specific surface area of from 15 to 100 m$^2$/g measured using nitrogen and the BET method according to ISO 9277:2010; and the platinum compound is selected from the group consisting of elemental platinum, platinum oxides and mixtures thereof. Furthermore, the present invention refers to a method for manufacturing the catalytic system, the use of the inventive catalytic system in a chemical reaction, the use of a solid carrier loaded with a platinum compound as a catalyst and to granules mouldings or extrudates comprising the catalytic system.

EP 4 306 210 A1

**Description**

The present invention refers to a catalytic system comprising a platinum compound on a solid carrier, wherein the content of the platinum species on the surface of the solid carrier is from 0.1 to 15 wt.-%, based on the dry weight of the solid carrier. The solid carrier is a precipitated calcium carbonate (PCC) and has a specific surface area of from 15 to 100 $m^2$/g measured using nitrogen and the BET method according to ISO 9277:2010; and the platinum compound is selected from the group consisting of elemental platinum, platinum oxides and mixtures thereof. Furthermore, the present invention refers to a method for manufacturing the catalytic system, the use of the inventive catalytic system in a chemical reaction, the use of a solid carrier loaded with a platinum compound as a catalyst and to granules mouldings or extrudates comprising the catalytic system.

Catalyst or catalytic systems comprising a carrier and a catalyst are widely used in catalysis and have several advantages. For example, the handling of such catalytic systems and also the isolation of reaction products is less expensive compared with homogeneous systems. Furthermore, the activity and efficiency of a catalytic system in a given reaction may be controlled by selecting specific structural properties of the carrier or a specific platinum compound.

Platinum compounds and are well-known catalysts and may be applied in a number of reactions, for example in alkene or alkyne hydrogenation. Known platinum compounds are, for example, elemental platinum.

Common support materials for heterogeneous catalysis are activated carbon, carbon black/graphite, alumina, barium sulphate and calcium carbonate (The Catalyst Technical Handbook, Johnson Matthey Co., 2005).

For example, DE2704345 A1 refers a catalyst in the form of tablets, preforms or pellets, wherein the catalyst consists of 1 to 5 wt.% platinum on a $CaCO_3$ carrier.

WO2021/058508 A1 refers to a catalytic system comprising a transition metal compound on a solid carrier, wherein the content of the transition metal element on the surface of the solid carrier is from 0.1 to 30 wt.-%, based on the dry weight of the solid carrier. The solid carrier can be calcium carbonate.

WO 2004/030813 A1 relates to a process for preparing a catalyst which involves (a) preparing a paste having a uniform mixture of at least one alkaline earth metal carbonate, a liquid medium, a silver bonding additive, and at least one extrusion aid and/or optionally a burnout additive; (b) forming one or more shaped particles from the paste; (c) drying and calcining the particles; and (e) impregnating the dried and calcined particles with a solution containing a silver compound. Said alkaline earth metal carbonate may be calcium carbonate.

WO 2013/190076 A1 relates to a catalytic system, which is a Lindlar type catalyst, wherein the support material (calcium carbonate) has an average particle size ($d_{50}$) of more than 10 $\mu$m. It further discloses the use of such a catalytic system for the partial hydrogenation of a carbon-carbon triple bond to a double bond. Specific examples of carrier materials include precipitated calcium carbonate.

However, platinum compounds are only rare available in natural resources and, therefore, high costs for procurement and recycling, if possible at all, incur. Another drawback is the toxicity of platinum compounds and, therefore, the catalyst loadings in platinum compound-catalysed reactions should be kept as low as possible. Accordingly, there is a continuous need for the improvement of catalytic systems to overcome one or more of the aforementioned drawbacks.

One object of the present invention may therefore be seen in the provision of a more efficient catalytic system, which allows to reduce the catalyst loading during catalysis and the overall consumption of platinum compounds and allows to obtain a specific compound, i.e. a product with high selectivity. A further object of the present invention may be seen in the provision of a time-saving catalytic system with higher turnover rates. Yet one further object may be seen in the provision of an easily recyclable catalytic system to reduce the overall consumption of platinum compounds. One further object may therefore be seen in the provision of a more environmentally compatible catalytic system.

The foregoing and other problems may be solved by the subject-matter as defined herein in the independent claims.

A first aspect of the present invention relates to a catalytic system comprising a platinum compound on a solid carrier, wherein

   a) the solid carrier is a precipitated calcium carbonate (PCC) and has a specific surface area of from 15 to 100 $m^2$/g measured using nitrogen and the BET method according to ISO 9277:2010; and
   b) wherein the platinum compound is selected from the group consisting of elemental platinum, platinum oxides and mixtures thereof;
   and wherein the content of the platinum species on the surface of the solid carrier is from 0.1 to 15 wt.-%, based on the dry weight of the solid carrier.

The inventors of the present application surprisingly found that the use of precipitated calcium carbonate (PCC) that has a specific surface area of from 15 to 100 $m^2$/g measured using nitrogen and the BET method according to ISO 9277:2010 as catalyst carrier in platinum compound catalysis, wherein the platinum compound is selected from the group consisting of elemental platinum, platinum oxides and mixtures thereof provides several advantages.

First of all, the used precipitated calcium carbonate (PCC) has a high surface area, namely a specific surface area of from 15 to 100 $m^2/g$ measured using nitrogen and the BET method according to ISO 9277:2010. Due to that high surface area, said material was found to be surprisingly useful as carrier material in catalysis.

In combination with the above mentioned platinum compound, for example, higher catalytic activities, for example higher phenylacetylene transformation under hydrogen was achieved with the catalytic systems according to the present invention. Furthermore, the inventive catalytic system showed improved selectivity, especially in alkyne hydrogenations, compared to commercially available platinum catalysts, especially under optimized reaction conditions and scale.

Another aspect of the present invention relates to a method for manufacturing a catalytic system comprising a platinum compound on a solid carrier, the method comprising the following steps:

(a) providing at least one solid carrier, wherein the solid carrier is a precipitated calcium carbonate (PCC) and has a specific surface area of from 15 to 100 $m^2/g$ measured using nitrogen and the BET method according to ISO 9277:2010,

(b) providing at least one platinum reagent comprising Pt ions, in such an amount that the amount of said ions is from 0.1 to 15 wt.-%, based on the dry weight of the solid carrier,

(c) contacting the at least one solid carrier provided in step (a) and the platinum reagent provided in step (b) to obtain a mixture comprising a solid carrier and a platinum reagent; and

(d) calcining the mixture of step (c) at a temperature between 200°C and 600°C for obtaining a catalytic system comprising a platinum oxide on the solid carrier.

The inventors surprisingly found that by the above method it is possible to provide a catalytic system wherein the platinum compound that is located on the solid carrier is platinum oxide, wherein the solid carrier is a precipitated calcium carbonate (PCC) and has a specific surface area of from 15 to 100 $m^2/g$ measured using nitrogen and the BET method according to ISO 9277:2010. Furthermore, the above method is a cheap and simple production process which provides the inventive catalytic system. In addition, the inventors surprisingly found that by the above method it is possible to provide a catalytic system wherein the platinum compound is homogeneously distributed on the surface of the high surface area precipitated calcium carbonate (PCC).

Another aspect of the present invention refers to the use of the inventive catalytic system in a process comprising the following steps:

(A) providing one or more reactants;

(B) providing the inventive catalytic system;

(C) subjecting the one or more reactants provided in step (A) to a chemical reaction in liquid or gas phase under $H_2$ atmosphere, or a combination of inert atmosphere and $H_2$ atmosphere at a temperature between 50 and 300 °C in the presence of the catalytic system provided in step (B).

Another aspect of the present invention refers to the use of a solid carrier according to the present invention loaded with a platinum compound according to the present invention as a catalyst.

Finally, another aspect of the present invention refers to granules, mouldings or extrudates comprising the inventive catalytic system.

It should be understood that for the purposes of the present invention, the following terms will have the following meanings:

A "catalyst system" or "catalytic system" or "catalyst" in the meaning of the present invention is a system that increases the rate of a chemical reaction by adding such a substance/compound/system to the reactants (compounds that are converted during the reaction), wherein the substance/compound/system is not consumed in the catalysed reaction and can continue to act repeatedly. The chemical reactions occur faster and/or have an improved yield and/or an improved selectivity in the presence of such a catalytic system because it provides an alternative reaction pathway with a lower activation energy than the non-catalysed mechanism.

A "platinum reagent" in the meaning of the present invention is a reagent that comprises a platinum in ionic form. A "platinum compound" in the meaning of the present invention is a compound that comprises platinum in elemental form or as platinum oxide.

A "solid carrier" in the meaning of the present invention is to be understood as a substance which may be loaded with a second substance (for example, platinum compound) for the purpose of transporting said second substance to a target environment (for example, a reactor), for easily recuperating the catalytic system in the end of the process and for allowing a controlled size distribution of the metal species on the surface of the carrier in the preparation procedure. In the present invention the platinum compound is located on the surface of the precipitated calcium carbonate.

"Ground natural calcium carbonate" (GNCC) in the meaning of the present invention is a calcium carbonate obtained from natural sources, such as limestone, marble, or chalk, and processed through a wet and/or dry treatment such as grinding, screening and/or fractionation, for example, by a cyclone or classifier.

"Precipitated calcium carbonate" (PCC) in the meaning of the present invention is a synthesised material, generally obtained by precipitation following a reaction of carbon dioxide and calcium hydroxide (hydrated lime) in an aqueous environment or by precipitation of a calcium- and a carbonate source in water. Additionally, precipitated calcium carbonate can also be the product of introducing calcium- and carbonate salts, calcium chloride and sodium carbonate for example, in an aqueous environment. PCC may have a vateritic, calcitic or aragonitic crystalline form. PCCs are described, for example, in EP 2 447 213 A1, EP 2 524 898 A1, EP 2 371 766 A1, EP 2 840 065 A1, or WO 2013/142473 A1.

The "particle size" of particulate materials such as the precipitated calcium carbonate or the catalytic system particles herein is described by its distribution of particle sizes $d_x(wt)$. Therein, the value $d_x(wt)$ represents the diameter relative to which $x$ % by weight of the particles have diameters less than $d_x(wt)$. This means that, for example, the $d_{20}(wt)$ value is the particle size at which 20 wt.-% of all particles are smaller than that particle size. The $d_{50}(wt)$ value is thus the weight median particle size, i.e. 50 wt.-% of all particles are smaller than that particle size. The measurement is made with a Sedigraph™ 5120 of Micromeritics Instrument Corporation, USA. The method and the instrument are known to the skilled person and are commonly used to determine particle size distributions. The measurement is carried out in an aqueous solution of 0.1 wt.% $Na_4P_2O_7$. The samples are dispersed using a high speed stirrer and sonication.

Throughout the present document, the "specific surface area" (in $m^2/g$) of precipitated calcium carbonate or the catalytic system particles or other materials is determined using the BET method (using nitrogen as adsorbing gas), which is well known to the skilled man (ISO 9277:2010).

For the purpose of the present invention the "porosity" or "pore volume" in ($cm^3/g$) refers to the intra-particle intruded specific pore volume. Said porosity or pore volume is determined using the BJH method, which is very well known to the skilled person (BS 4359-1:1996).

For the purpose of the present invention the "pore size" in (nm or $\mu$m) refers to the intra-particle pore size. Said pore size is determined using the BJH method, which is very well known to the skilled person (BS 4359-1:1996).

A "suspension" or "slurry" in the meaning of the present invention comprises insoluble solids and a liquid medium, for example water, and optionally further additives, and usually contains large amounts of solids and, thus, is more viscous and can be of higher density than the liquid from which it is formed.

The term "solid" according to the present invention refers to a material that is solid under standard ambient temperature and pressure (SATP) which refers to a temperature of 298.15 K (25 °C) and an absolute pressure of exactly 1 bar. The solid may be in the form of a powder, tablet, granules, flakes etc. Accordingly, the term "liquid medium" refers to a material that is liquid under standard ambient temperature and pressure (SATP) which refers to a temperature of 298.15 K (25 °C) and an absolute pressure of exactly 1 bar.

Where the term "comprising" is used in the present description and claims, it does not exclude other non-specified elements of major or minor functional importance. For the purposes of the present invention, the term "consisting of" is considered to be a preferred embodiment of the term "comprising". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This, e.g., means that, unless the context clearly dictates otherwise, the term "obtained" does not mean to indicate that, e.g., an embodiment must be obtained by, e.g. the sequence of steps following the term "obtained" even though such a limited understanding is always included by the terms "obtained" or "defined" as a preferred embodiment.

Advantageous embodiments of the inventive catalytic system, the corresponding method of manufacturing said catalytic system and uses of said catalytic system are defined hereinafter as well as in the corresponding subclaims.

In one embodiment according to the present invention, the solid carrier has:

(i) a specific surface area in the range of from 20 to 90 $m^2/g$, preferably from 25 to 80 $m^2/g$, more preferably from 30 to 70 $m^2/g$, and most preferably from 35 to 60 $m^2/g$, measured using nitrogen and the BET method according to ISO 9277:2010; and/or
(ii) a $d_{50}(wt)$ in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and/or
(iii) a $d_{98}(wt)$ in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

In another embodiment according to the present invention, the platinum compound is selected from the group consisting of elemental platinum, PtO, $PtO_2$, $PtO_3$ and mixtures thereof, preferably is selected from the group consisting of elemental platinum, PtO, $PtO_2$ and mixtures thereof, and most preferably is elemental platinum.

According to still another embodiment of the present invention, the content of the platinum species on the surface of the solid carrier is in the range of from 0.25 to 13 wt. %, preferably from 0.5 to 11 wt. %, more preferably 1.0 to 10.0 wt. %, even more preferably from 1.5 to 8.0 wt. % and most preferably from 2.0 to 7.0 wt. %, based on the dry weight of the solid carrier.

According to still another embodiment of the present invention, the catalytic system is in the form of particles and has:

> (i) a specific surface area in the range of from 15 to 80 $m^2/g$, preferably from 20 to 75 $m^2/g$, more preferably from 25 to 70 $m^2/g$, and most preferably from 35 to 60 $m^2/g$, measured using nitrogen and the BET method according to ISO 9277:2010; and/or
> (ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and/or
> (iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

According to still another embodiment of the present invention, the inventive method further comprises step (e) of reducing the calcined catalytic system obtained from step (d) under $H_2$ atmosphere at a temperature between 100°C and 500°C for obtaining a catalytic system comprising elemental platinum, platinum oxides and mixtures thereof.

According to still another embodiment of the present invention, the calcining step (d) is performed

> (i) under air, $N_2$ atmosphere, Ar atmosphere, $O_2$ atmosphere or mixtures thereof and/or
> (ii) at a temperature between 270°C and 480°C, preferably at a temperature between 300°C and 450°C, and most preferably at a temperature between 330°C and 400°C.

According to still another embodiment of the present invention, the inventive method further comprises step (f) of providing a solvent and contacting the at least one solid carrier provided in step (a) and/or the platinum reagent provided in step (b) before or during step (c) in any order and preferably the solvent is a non-polar solvent, a polar solvent or a mixture thereof, more preferably the non-polar solvent is selected from the group consisting of pentane, cyclopentane, hexane, cyclohexane, benzene, toluene, 1,4-dioxane, chloroform, diethyl ether, dichloromethane and mixtures thereof and/or the polar solvent is selected from the group consisting of tetrahydrofuran, ethyl acetate, acetone, dimethylformamide, acetonitrile, dimethyl sulphoxide, nitromethane, propylene carbonate, formic acid, n-butanol, isopropanol, n-propanol, ethanol, methanol, acetic acid, water and mixtures thereof even more preferably the solvent is a polar solvent and most preferably the solvent is water.

According to still another embodiment of the present invention, the inventive method further comprises step (g) of removing at least part of the solvent after step (c) and before step (d) by evaporation and/or filtration and/or centrifugation and/or spray drying to obtain a concentrated mixture.

According to still another embodiment of the present invention, the inventive method further comprises step (h) of thermally treating the mixture of step (c) or the concentrated mixture of step (g) at a temperature between 25°C and 200°C, preferably at a temperature between 50°C and 180°C, and most preferably at a temperature between 100°C to 150°C.

According to still another embodiment of the present invention, the platinum reagent is selected from the group consisting of $KPt(NH_3)Cl_3$, $Pt(NH_3)_2Cl_2$, $K[(H_2C=CH_2)PtCl_3] \cdot xH_2O$, $Na_2PtCl_6$, $Pt(acac)_2$, $Na_2PtCl_4$, $H_2PtCl_6$, $(NH_4)2[PtCl_6]$, $PtCl_4$, $Pt(NO_3)_4$, and mixtures thereof, preferably from the group consisting of $Na_2PtCl_6$, $Pt(acac)_2$, $Na_2PtCl_4$, $H_2PtCl_6$, $(NH_4)2[PtCl_6]$, $PtCl_4$, $Pt(NO_3)_4$, and mixtures thereof, and most preferably is selected from $PtCl_4$, $Pt(NO_3)_4$, and mixtures thereof.

According to still another embodiment of the present invention, the inventive process further comprises step (D) of recovering and optionally recycling the catalytic system following the chemical reaction of step (C).

According to still another embodiment of the present invention, the chemical reaction in step (C) is selected from one or more of alkene hydrogenations, and alkyne hydrogenations and preferably is selected from one or more of alkyne hydrogenations.

## Method for manufacturing the catalytic system

As set out hereinabove, the method for manufacturing the inventive catalytic system comprising a platinum compound on a solid carrier comprises steps (a) - (d). Said process optionally further comprises steps (e) and/or (f) and/or (g) and/or (h).

It should be understood, that the method of the present invention, namely the method for manufacturing the inventive catalytic system may be carried out as a continuous process or as a batch process. Preferably, the inventive method is carried out as a batch process.

In the following, it is referred to further details of the present invention and especially to the foregoing steps of the inventive process for locating the platinum compound on the surface of a precipitated calcium carbonate, which has a high specific surface area.

It should be known that the defined embodiments of the inventive method also apply to the inventive catalytic system, as well as to the use of the inventive catalytic system, to the use of a solid carrier loaded with a platinum compound as a catalyst and to the inventive products in different shapes such as granules, mouldings or extrudates and vice versa.

**Step (a): Providing at least one solid carrier**

According to the present invention in step (a) at least one solid carrier is provided, wherein the solid carrier is a precipitated calcium carbonate (PCC) that has a specific surface area of from 15 to 100 $m^2$/g measured using nitrogen and the BET method according to ISO 9277:2010.

The expression "at least one" solid carrier means that one or more, for example, two or three solid carriers may be provided. According to a preferred embodiment, the at least one solid carrier comprises only one solid carrier as provided in step a).

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water or by precipitation by combining calcium and carbonate ions, for example $CaCl_2$ and $Na_2CO_3$, out of solution. Further possible ways of producing PCC are the lime soda process, or the Solvay process in which PCC is a by-product of ammonia production.

Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be washed and mechanically dewatered and dried by well-known processes, e.g., by flocculation, filtration or forced evaporation prior to drying. The subsequent step of drying (if necessary) may be carried out in a single step such as spray drying, or in at least two steps.

For the purpose of step (a) of the present invention, the solid carrier may be provided either in dried form or as a suspension in a suitable liquid medium. Unless specified otherwise, the terms "dried" or "dry" refer to a material having constant weight at 200 °C, whereby constant weight means a change of 1 mg or less over a period of 30 s per 5 g of sample.

According to one embodiment the solid carrier is provided as a slurry in a solvent. According to one embodiment the solvent is a non-polar solvent, a polar solvent or a mixture thereof, more preferably the non-polar solvent is selected from the group consisting of pentane, cyclopentane, hexane, cyclohexane, benzene, toluene, 1,4-dioxane, chloroform, diethyl ether, dichloromethane and mixtures thereof and/or the polar solvent is selected from the group consisting of tetrahydrofuran, ethyl acetate, acetone, dimethylformamide, acetonitrile, dimethyl sulphoxide, nitromethane, propylene carbonate, formic acid, n-butanol, isopropanol, n-propanol, ethanol, methanol, acetic acid, water and mixtures thereof even more preferably the solvent is a polar solvent and most preferably the solvent is water. According to one embodiment of the present invention, the slurry comprising the precipitated calcium carbonate has a content of precipitated calcium carbonate within the range of from 1 to 90 wt.%, more preferably from 3 to 60 wt.%, even more preferably from 5 to 40 wt.%, and most preferably from 10 to 25 wt.%, based on the total weight of said slurry. The precipitated calcium carbonate slurry can optionally further stabilized by a dispersant. Conventional dispersants known to the skilled person can be used. A preferred dispersant is comprised of polyacrylic acids and/or carboxymethylcelluloses.

Alternatively, the obtained PCC slurry can be dried as described above, thereby obtaining the solid (i.e. dry or containing as little water that it is not in a fluid form) precipitated calcium carbonate in the form of granules or a powder.

In a preferred embodiment, the solid carrier is provided in dried form.

According to one embodiment of the present invention, the at least one solid carrier is precipitated calcium carbonate, preferably comprising aragonitic, vateritic or calcitic mineralogical crystal forms or mixtures thereof.

According to one embodiment of the present invention, the at least one solid carrier comprises one type of precipitated calcium carbonate. According to another embodiment of the present invention, the at least one solid carrier comprises a mixture of two or more precipitated calcium carbonates selected from different crystalline forms and different polymorphs of precipitated calcium carbonate. For example, the at least one precipitated calcium carbonate may comprise one PCC selected from S-PCC and one PCC selected from R-PCC.

It is appreciated that the amount of calcium carbonate in the at least one solid carrier is at least 80 wt.-%, e.g. at least 95 wt.-%, preferably between 97 and 100 wt.-%, more preferably between 98.5 and 99.95 wt.-%, based on the total dry weight of the at least one solid carrier.

The at least one solid carrier is preferably in the form of a particulate material, and may have a particle size distribution as conventionally employed for the material(s) involved in the type of product to be produced. In general, it is preferred that the at least one solid carrier has a weight median particle size $d_{50}$ value in the range from 1 to 75 $\mu$m. For example, the at least one solid carrier has a weight median particle size $d_{50}$ from 2 $\mu$m to 50 $\mu$m, more preferably from 3 to 40 $\mu$m even more preferably from 4 to 30 $\mu$m and most preferably from 5 $\mu$m to 15 $\mu$m.

Additionally or alternatively, the at least one solid carrier has a top cut ($d_{98}$) in the range of 2 to 150 $\mu$m, preferably from 6 to 80 $\mu$m, even more preferably from 8 to 60 $\mu$m and most preferably from 10 to 30 $\mu$m.

The at least one solid carrier has a BET specific surface area of from 15 and 100 m2/g as measured by the BET nitrogen method. According to a preferred embodiment, the at least one solid carrier has a specific surface area (BET) of from 20 to 90 m2/g, more preferably of from 25 to 80 m2/g, more preferably of from 30 to 70 m2/g and most preferably of from 35 to 60 m2/g as measured by the BET nitrogen method according to ISO 9277:2010.

Additionally or alternatively, the at least one solid carrier has a residual total moisture content of from 0.01 to 1 wt.-%, preferably from 0.01 to 0.2 wt.-%, more preferably from 0.02 to 0.2 wt.-% and most preferably from 0.03 to 0.2 wt.-%, based on the total dry weight of the at least one solid carrier.

Thus it is preferred that the at least one solid carrier has:

(i) a specific surface area in the range of from 15 to 100 m2/g, measured using nitrogen and the BET method according to ISO 9277:2010; and one or more of the following features:
(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and/or
(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

According to a preferred embodiment, the at least one solid carrier has:

(i) a specific surface area in the range of from 20 to 90 m2/g, preferably from 25 to 80 m2/g, more preferably from 30 to 70 m2/g, and most preferably from 35 to 60 m2/g, measured using nitrogen and the BET method according to ISO 9277:2010; and/or
(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and/or
(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

Alternatively, the at least one solid carrier has:

(i) a specific surface area in the range of from 20 to 90 m2/g, preferably from 25 to 80 m2/g, more preferably from 30 to 70 m2/g, and most preferably from 35 to 60 m2/g, measured using nitrogen and the BET method according to ISO 9277:2010; and
(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and
(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m

According to a preferred embodiment of the present invention, the at least one solid carrier is a precipitated calcium carbonate (PCC) and has

(i) a specific surface area in the range of from 30 to 70 m2/g, measured using nitrogen and the BET method according to ISO 9277:2010, and
(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and/or
(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

According to another embodiment, the precipitated calcium carbonate has an intra-particle intruded specific pore volume in the range from 0.001 to 2.3 cm3/g, more preferably from 0.01 to 1.5 cm3/g, especially preferably from 0.02 to 1.0 cm$^3$/g and most preferably from 0.02 to 0.5 cm$^3$/g, measured using the BJH method according to BS 4359-1:1996.

The intra-particle pore size of the precipitated calcium carbonate preferably is in a range of from 0.004 to 1.6 $\mu$m, more preferably in a range of between 0.005 to 1.0 $\mu$m, especially preferably from 0.006 to 0.80 $\mu$m and most preferably of 0.007 to 0.50 $\mu$m, e.g., 0.010 to 0.10 $\mu$m, measured using the BJH method according to BS 4359-1:1996.

**Step (b): Providing at least one platinum reagent**

In step (b) of the manufacturing method according to the present invention, at least one platinum reagent is provided.

The expression "at least one" platinum reagent means that one or more, for example, two or three platinum reagents may be provided. According to a preferred embodiment, the at least one s platinum reagent comprises only one solid carrier as provided in step b).

The platinum reagent according to the present invention comprises Pt ions, and mixtures thereof and is provided in such an amount that the amount of said ions is from 0.1 to 15 wt.-%, based on the dry weight of the solid carrier.

In principle, there exist four types of reagents, depending on how the constituent atoms are held together: molecules held together by covalent bonds, salts held together by ionic bonds, intermetallic compounds held together by metallic bonds, and certain complexes held together by coordinate covalent bonds. The platinum reagent thus may be a molecular platinum reagent, a platinum salt, a platinum compound including the elemental platinum compound or a platinum complex.

According to a preferred embodiment of the present invention, the platinum reagent is a platinum salt or a platinum complex.

In another preferred embodiment according to the present invention, the platinum reagent comprises one or more of the following counter ions: hydride, sulphide, fluoride, chloride, bromide, iodide, carbonate, acetate, cyanide, thiocyanate, nitrate, nitrosyl nitrate, phosphate and sulphate.

In another preferred embodiment, the platinum reagent comprises one or more of the following ligands: acetylacetonate (acac), chloride, acetate, triphenylphosphine, 1,1'-bis(diphenylphosphino)-ferrocene (dppf), 1,2-bis(diphenylphosphino)ethane (dppe), 1,3-bis(diphenylphosphino)propane (dppp), 1,4-bis(diphenylphosphino)butane (dppb), allyl, dibenzylideneacetone or dibenzalacetone (dba), and ethylenediamine.

According to a preferred embodiment the platinum salt and/or the platinum complex is water soluble and, therefore, forms a solution when dissolved in water. The "absolute water solubility" of a compound is to be understood as the maximum concentration of a compound in water where one can observe a single phase mixture at 20°C under equilibrium conditions. The absolute water solubility is given in g compound per 100 g water. According to a preferred embodiment the platinum salt and/or the platinum complex has absolute water solubility of above 0.1 g per 100 g water, preferably of above 1 g per 100 g water and most preferably of above 5 g per 100 g water.

According to another embodiment of the present invention, the platinum reagent is selected from the group consisting of $KPt(NH_3)Cl_3$, $Pt(NH_3)_2Cl_2$, $K[(H_2C=CH_2)PtCl_3]\cdot xH_2O$, $Na_2PtCl_6$, $Pt(acac)_2$, $Na_2PtCl_4$, $H_2PtCl_6$, $(NH_4)2[PtCl_6]$, $PtCl_4$, $Pt(NO_3)_4$, and mixtures thereof, preferably from the group consisting of $Na_2PtCl_6$, $Pt(acac)_2$, $Na_2PtCl_4$, $H_2PtCl_6$, $(NH_4)2[PtCl_6]$, $PtCl_4$, $Pt(NO_3)_4$, and mixtures thereof, and most preferably is selected from $PtCl_4$, $Pt(NO_3)_4$, and mixtures thereof. Such compounds are known to the skilled person and are commercially available.

For the purpose of step (b), the platinum reagent may in principle be provided in any form, meaning that the platinum reagent may be provided as a neat compound or it may be provided in a liquid medium in form of a solution or suspension.

The platinum reagent according to the present invention is provided in such an amount that the amount of said ions is from 0.1 to 15 wt.-%, based on the dry weight of the solid carrier. Alternatively, the platinum reagent according to the present invention is provided in such an amount that the amount of said ions is from 0.25 to 13 wt. %, preferably from 0.5 to 11 wt. %, more preferably 1.0 to 10.0 wt. %, even more preferably from 1.5 to 8.0 wt. % and most preferably from 2.0 to 7.0 wt. %, based on the dry weight of the solid carrier.

**Optional step (f): providing a solvent**

According to one embodiment of the present invention, the method further comprises optional step (f) of providing a solvent and contacting the at least one solid carrier provided in step (a) and/or the platinum reagent provided in step (b) before or during step (c) in any order.

According to one embodiment of the present invention only the at least one solid carrier provided in step (a) is contacted with the solvent. Said slurry may have a solid content within the range of from 1 to 95 wt.-%, preferably from 3 to 60 wt.-%, more preferably from 5 to 40 wt.-% and most preferably from 10 to 25 wt.-%, based on the total weight of the slurry. To the obtained slurry the at least one platinum reagent is added in dry form.

Alternatively, the at least one platinum reagent provided in step (b) is contacted with the solvent. Said slurry or solution may have a solids content within the range of from 0.1 to 50 wt.-%, preferably from 0.1 to 40 wt.-%, more preferably from 0.2 to 3 wt.-% and most preferably from 0.5 to 10 wt.-%, based on the total weight of the slurry or solution. To the obtained slurry or solution the at least one solid carrier is added in dry form.

The contacting of the at least one platinum reagent provided in step (b) with a solvent in step (f) may be preferred as this may lead to a more homogenous mixture in any of the subsequent steps, for example in contacting step (c) of the inventive method for manufacturing the catalytic system. For the same reason, solutions may be preferred over suspensions. In a preferred embodiment, the platinum reagent provided in step (b) is thus in form of a solution or suspension in step (c), preferably in form of a solution.

According to a preferred embodiment two solvents are provided. The at least one solid carrier provided in step (a) is contacted with one solvent and the at least one platinum reagent provided in step (b) is contacted with the other solvent. Afterwards both slurries or the slurry and the solution are mixed.

The solvent for the provision of the at least one solid carrier and the solvent for the provision of the at least one platinum reagent may be the same or may be different. According to a preferred embodiment the two solvents are the same.

According to one embodiment the solvent is a non-polar solvent, a polar solvent or a mixture thereof.

According to a preferred embodiment of the present invention, the non-polar solvent is selected from the group consisting of pentane, cyclopentane, hexane, cyclohexane, benzene, toluene, 1,4-dioxane, chloroform, diethyl ether, dichloromethane and mixtures thereof. According to another preferred embodiment of the present invention, the polar solvent is selected from the group consisting of tetrahydrofuran, ethyl acetate, acetone, dimethylformamide, acetonitrile, dimethyl sulphoxide, nitromethane, propylene carbonate, formic acid, n-butanol, isopropanol, n-propanol, ethanol, methanol, acetic acid, water and mixtures thereof.

According to another preferred embodiment of the present invention, the solvent for the solid carrier and/or the platinum reagent is a polar solvent and most preferably is water.

### Step (c): Contacting the at least one solid carrier and the platinum reagent

In step (c) of the manufacturing method according to the present invention, the at least one solid carrier provided in step (a) and the at least one platinum reagent provided in step (b) are brought into contact to obtain a mixture comprising a solid carrier and a platinum reagent.

Step (c) of contacting the solid carrier and the platinum reagent serves to impregnate at least part of the accessible surface of the solid carrier with said platinum reagent.

The contacting of the at least one solid carrier provided in step (a) and the at least one platinum reagent provided in step (b) can be accomplished by any conventional means known to the skilled person.

According to one embodiment of the present invention, step (c) comprises the steps of providing the at least one solid carrier provided in step (a) in a first step and then adding the at least one platinum reagent provided in step (b) in a subsequent step. According to another embodiment of the present invention, step (c) comprises the steps of first providing the at least one platinum reagent provided in step (b) and subsequently adding the at least one solid carrier provided in step (a). According to still another embodiment, the at least one solid carrier provided in step (a) and the at least one platinum reagent provided in step (b) are provided and contacted simultaneously.

In case the at least one solid carrier provided in step (a) is provided as a first step, it is possible to add the at least one platinum reagent provided in step (b) in one portion or it may be added in several equal or unequal portions, i.e. in larger and smaller portions.

During contacting step (c) of the inventive process, a mixture comprising the solid carrier of step (a) and the platinum reagent of step (b) is obtained. Said mixture may be a solid, preferably in powder form or a suspension or slurry in liquid form. Preferably the mixture is a suspension or slurry in liquid form.

In one embodiment of the method according to the present invention (i) the at least one solid carrier of step (a) is provided in a solvent in form of a suspension; and/or (ii) the at least one platinum reagent of step (b) is provided in a solvent in form of a solution or a suspension, preferably in form of a solution.

In a preferred embodiment, the solid carrier is provided as a suspension in a solvent, wherein also the platinum reagent is provided in a solvent in form of a solution or suspension, preferably in form of a solution.

As already described hereinabove, the solid carrier may be provided as a suspension or slurry, in which case the suspension or slurry will contain a suitable solvent. In general, said solvent may differ from the solvent described herein as a suitable solvent for the provision of the at least one platinum reagent in form of a solution or a suspension.

However, in a preferred embodiment, the solvent for the provision of the at least one solid carrier and the solvent for the provision of the at least one platinum reagent is the same.

The mixture obtained in step (c) may comprise any of the solvent(s) disclosed hereinabove, for example the solvent(s) may be a non-polar solvent, a polar solvent or a mixture thereof, preferably the non-polar solvent is selected from the group consisting of pentane, cyclopentane, hexane, cyclohexane, benzene, toluene, 1,4-dioxane, chloroform, diethyl ether, dichloromethane and mixtures thereof and/or the polar solvent is selected from the group consisting of tetrahydrofuran, ethyl acetate, acetone, dimethylformamide, acetonitrile, dimethyl sulphoxide, nitromethane, propylene carbonate, formic acid, *n*-butanol, isopropanol, n-propanol, ethanol, methanol, acetic acid, water and mixtures thereof. Preferably, the mixture obtained in step (c) further comprises water, ethanol, ethanol/water mixtures, toluene and mixtures thereof and most preferably further comprises water.

The contacting step (c) can be carried out by any means known in the art. For example, the at least one solid carrier of step (a) and the platinum reagent of step (b) can be brought into contact by spraying and/or mixing. Suitable devices for spraying or mixing are known to the skilled person.

According to one embodiment of the present invention, step (c) may be carried out by spraying. Preferably, step (c) is carried out by mixing.

The mixing in step (c) can be accomplished by any conventional means known to the skilled person. The skilled person will adapt the mixing conditions such as the mixing speed, dividing, and temperature according to his process equipment. Additionally, the mixing may be carried out under homogenising and/or particle dividing conditions.

For example, mixing and homogenising may be performed by use of a ploughshare mixer. Ploughshare mixers function by the principle of a fluidised bed which is produced mechanically. Ploughshare blades rotate close to the inside wall of a horizontal cylindrical drum, thereby conveying the components of the mixture out of the product bed and into the open mixing space. Said fluidised bed ensures intense mixing of even large batches in a very short time. Choppers and/or dispersers are used to disperse lumps in case of a dry operating mode. Equipment that may be used in the inventive process is commercially available, for example, from Gebrüder Lödige Maschinenbau GmbH, Germany or from VISCO JET Rührsysteme GmbH, Germany.

According to another embodiment of the present invention, step (c) is carried out for at least 1 second, preferably for at least 1 minute (e.g. 10 min, 30 min or 60 min). According to a preferred embodiment step (c) is carried out for a period of time ranging from 1 second to 60 min, preferably for a period of time ranging from 15 min to 45 min. For example, mixing step (d) is carried out for 30 min ± 5 min.

It is also within the confines of the present invention that suitable solvent as described in optional step (f) may be added during process step (c), for example, in case the solid carrier is provided in dry form and the platinum reagent is provided in neat form or in case it is intended to adjust the solids content or the Brookfield viscosity of the mixture to a specific value.

According to one embodiment of the present invention, the mixture obtained in step (c) has a solids content within the range of from 1 to 90 wt.-%, preferably from 3 to 60 wt.-%, more preferably from 5 to 40 wt.-% and most preferably from 10 to 25 wt.-%, based on the total weight of said mixture.

**Optional step (g): Removing at least part of the solvent**

The method according to the present invention may optionally comprise step (g) of removing at least part of the solvent after step (c) and before step (d) by evaporation and/or filtration and/or centrifugation and/or spray drying to obtain a concentrated mixture.

As already discussed hereinabove, the mixture obtained in contacting step (c) may comprise a solvent, for example if the at least one solid carrier in step (a) is provided as a suspension or slurry or if the at least one platinum reagent in step (b) is provided in form of a solution or suspension.

Step (g) yields a concentrated mixture, which contains less solvent than the mixture obtained in contacting step (c). In principle, concentrating step (g) can be accomplished by any conventional means known to the skilled person, for example by evaporation of the liquid medium and/or by filtration and/or by centrifugation and/or by spray drying.

The method of choice in step (g) may depend on the nature of the solvent contained in the mixture of step (c). For example, it may be preferred to remove aprotic solvents (e.g. toluene) by evaporation while protic solvents (e.g. ethanol or water) may preferably be removed by filtration. In further instances, an initial filtration combined with subsequent evaporation of residual liquid medium under reduced pressure (vacuum) may be preferred.

According to one embodiment of the present invention, the inventive method further comprises step (g) of removing at least part of the solvent contained in the mixture of step (c) by evaporation. For example, evaporation of the solvent may be carried out by application of heat and/or reduced pressure using a vacuum pump.

According to another embodiment of the present invention, the inventive method further comprises step (g) of removing at least part of the solvent contained in the mixture of step (c) by filtration. For example, filtration may be carried out by means of a drum filter or a filter press or by means of nanofiltration.

According to still another embodiment of the present invention, the inventive method further comprises step (g) of removing at least part of the solvent contained in the mixture of step (c) by filtration and evaporation, preferably by filtration and subsequent evaporation.

According to still another embodiment of the present invention, the inventive method further comprises step (g) of removing at least part of the solvent contained in the mixture of step (c) by centrifugation. For example, centrifugation and decanting of the solvent may be carried out by a disc centrifuge.

According to still another embodiment of the present invention, the inventive method further comprises step (g) of removing at least part of the solvent contained in the mixture of step (c) by spray drying. For example, spray drying of the solvent may be carried out in a spray dryer.

The mixture obtained in step (g), after removing at least part of the solvent contained in the mixture of step (c), is a concentrated mixture. In a preferred embodiment, said concentrated mixture has a solids content of at least 70 wt.-%, preferably at least 80 wt.-%, more preferably at least 85 wt.-% and most preferably at least 90 wt.-%, based on the total weight of said mixture. For example, said concentrated mixture may have a solids content of 95 wt.-%, based on the total weight of said mixture.

According to still another embodiment of the inventive process, the solvent contained in the mixture of step (c) is removed in step (g) to obtain a dried mixture.

**Optional step (h): Thermal treatment**

According to optional step (h) of the method for manufacturing the inventive catalytic system, the mixture of step (c) or the concentrated mixture of optional step (g) is thermally treated at a temperature between 25 °C and 200 °C, preferably at a temperature between 50 °C and 180 °C, and most preferably at a temperature between 100 and 150 °C.

The term "heating" or "thermally treatment" is not limiting the process according to the present invention to a process, wherein the temperature of the mixture is adjusted actively to the defined temperature range by addition of energy through an external heat source. Said term also comprises keeping the temperature reached in an exothermic reaction, for example in contacting step (c), during a specified period of time.

The thermal treatment may be carried out for a specific period of time. In one embodiment, step (h) is thus carried out for at least 5 mins, preferably for 0.25 h to 24 h, more preferably for 1 h to 5 h and most preferably for 2 to 3 h.

In a preferred embodiment, the mixture of step (c) or the concentrated mixture of optional step (g) is thermally treated at a temperature between 25 °C and 200 °C, preferably at a temperature between 50 °C and 180 °C, and most preferably at a temperature between 100 and 150 °C, wherein said thermal treatment is carried out for at least 5 min, preferably for 0.25 h to 24 h, more preferably for 1 h to 5 h and most preferably for 2 to 3 h.

In general, the optional thermally treatment step may take place using any suitable thermally treatment/heating equipment and can, for example, include thermal heating and/or heating at reduced pressure using equipment such as an evaporator, a flash drier, an oven, a spray drier and/or drying in a vacuum chamber. The optional thermally treatment step can be carried out at reduced pressure, ambient pressure or under increased pressure. Preferably, the optional thermally heating step is performed at ambient pressure.

**Step (d): Calcination Step**

In step (d) the mixture of step (c) is calcined at a temperature between 200°C and 600°C.

The term "calcination" according to the present invention denotes a thermal treatment at elevated temperatures leading to a partial or full thermal conversion of the platinum reagent (partial of full calcination). During calcination the platinum reagent comprising Pt ions transforms partially or fully to Pt oxide.

According to a preferred embodiment of the present invention, the calcination step (d) is performed at a temperature between 270°C and 480°C, preferably at a temperature between 300°C and 450°C, and most preferably at a temperature between 330°C and 400°C.

The calcination step of the present invention is not limited to a step, wherein the temperature of the mixture is adjusted actively to the defined temperature range by addition of energy through an external heat source. The calcination step also comprises keeping the temperature reached in that step for a specified period of time.

The calcination step may be carried out for a specific period of time. In one embodiment, step (h) is thus carried out for at least 10 min, preferably for 0.5 h to 24 h, more preferably for 1 h to 5 h and most preferably for 2.5 to 3.5 h.

The calcination step may be carried out under air, $N_2$ atmosphere, Ar atmosphere, $O_2$ atmosphere or mixtures and preferably is carried out under air.

According to a preferred embodiment of the present invention, the calcination step is performed at a temperature between 200°C and 600°C, preferably at a temperature between 270°C and 480°C, more preferably at a temperature between 300°C and 450°C, and most preferably at a temperature between 330°C and 400°C, under air, $N_2$ atmosphere, Ar atmosphere, $O_2$ atmosphere or mixtures.

In general, the calcination step may take place using any suitable calcination/heating equipment and can, for example, include thermal heating and/or heating at reduced pressure using equipment such as a flash drier or an oven. Preferably, the calcination step is performed at ambient pressure.

**Optional Step (e): Reducing the calcined catalytic system**

According to optional step (e) of the method for manufacturing the inventive catalytic system, the calcined catalytic system obtained from step (d) is reduced under $H_2$ atmosphere at a temperature between 100°C and 500°C for obtaining a catalytic system comprising elemental platinum, platinum oxides and mixtures thereof.

By such an reduction step a catalytic system comprising a platinum compound on the solid carrier is obtained, wherein the platinum compound is selected from the group consisting of elemental platinum, platinum oxides and mixtures thereof.

The term "reducing" in the meaning of the present invention refers to a chemical reaction wherein the oxidation state of the platinum in in the platinum reagent is changed from a higher oxidation state to a lower oxidation state and preferably to zero. More precisely, during reducing step (e) the platinum reagent on the surface of the solid carrier undergoes a reaction wherein elemental platinum, platinum oxides and mixtures thereof are obtained on the surface of the at least one solid carrier.

The reduction step is necessary to obtain the catalytic system comprising the platinum compound on the solid carrier, wherein the platinum compound is selected from elemental Pt, platinum oxide, especially with a lower oxidation state than before the reducing reaction, and mixtures thereof.

Without such a reduction step it is not possible to obtain the platinum compound in elemental form on the surface of the solid carrier, or in a lower oxidation state than before the reducing reaction. For example, the platinum reagent comprises the platinum metal in an oxidation state of I to VI and is reduced to a lower oxidation state than before the reduction reaction or to an oxidation state of 0.

More precisely, the platinum reagent comprises Pt in the oxidation states Pt (I), Pt(II), Pt(III), Pt(IV), Pt(V), Pt(VI), and mixtures thereof and is reduced to Pt in the oxidation state that is at least one oxidation state lower as before the reduction reaction and preferably to an oxidation state of 0 and mixtures thereof. For example, Pt(VI) is reduced to elemental Pt, Pt (I), Pt(II), Pt(III), Pt(IV), Pt(V) or mixtures thereof, Pt(V) is reduced to elemental Pt, Pt (I), Pt(II), Pt(III), Pt(IV), or mixtures thereof, Pt(IV) is reduced to elemental Pt, Pt (I), Pt(II), Pt(III), or mixtures thereof, Pt(III) is reduced to elemental Pt, Pt (I), Pt(II), or mixtures thereof, Pt(II) is reduced to elemental Pt, Pt (I), or mixtures thereof, and Pt(I) is reduced to elemental Pt.

In addition to the platinum compound selected from the group consisting of elemental platinum, platinum oxides and mixtures thereof on the surface of the at least one solid carrier also other reaction compounds may be present after the reduction step. These reaction compounds may be products that are obtained from the counter ions of the platinum salt or the ligands of the platinum complex with calcium carbonate.

Preferably the amount of these reaction products is lower than 100 wt.-%, based on the dry weight of the platinum compound on the surface of the at least one solid carrier, more preferably lower than 80 wt.-%, even more preferably lower than 50 wt.-%, even more preferably lower than 30 wt.-% and most preferably lower than 10 wt.-% based on the dry weight of the platinum compound on the surface of the at least one solid carrier.

According to a preferred embodiment of the present invention, the catalytic system merely consists of the at least one solid carrier and the platinum compound on the surface of said carrier, wherein the platinum compound is selected from the group consisting of elemental platinum, platinum oxides and mixtures thereof.

The reduction step (d) is performed under $H_2$ atmosphere, which means that the $H_2$ comprises from 5 vol.-% to 99.99 vol.-% of $H_2$, based on the total volume of the gas, preferably from 7 vol.-% to 99.95 vol.-% of $H_2$, even more preferably from 10 vol.-% to 99.90 vol.-% of $H_2$ and most preferably from 15 to 99 vol.-% of $H_2$, based on the total volume of the gas. The remaining gas up to 100 vol.-% is an inert gas such as nitrogen, argon and/or helium.

According to a preferred embodiment of the present invention, the reducing step (e) is performed at a temperature between 100°C and 500°C, preferably at a temperature between 300°C and 450°C, and most preferably at a temperature between 350°C and 400°C.

The reducing step of the present invention is not limited to a step, wherein the temperature of the mixture is adjusted actively to the defined temperature range by addition of energy through an external heat source. The reducing step also comprises keeping the temperature reached in that step for a specified period of time.

The reducing step may be carried out for a specific period of time. In one embodiment, step (e) is thus carried out for at least 10 min, preferably for 0.5 h to 24 h, more preferably for 1 h to 5 h and most preferably for 2.5 to 3.5 h.

According to a preferred embodiment of the present invention, the reducing step (e) is performed at a temperature between 100 °C and 500°C, preferably between 200°C and 475°C, more preferably at a temperature between 300°C and 450°C, and most preferably at a temperature between 350°C and 400°C under $H_2$ atmosphere for at least 10 min, preferably for 0.5 h to 24 h, more preferably for 1 h to 5 h and most preferably for 2.5 to 3.5 h.

The inventors surprisingly found that by the above method it is possible to provide a catalytic system wherein the platinum compound that is selected from the group consisting of elemental platinum, platinum oxides and mixtures thereof; is located on the solid carrier, which is a precipitated calcium carbonate and has a specific surface area of from 15 to 100 $m^2$/g measured using nitrogen and the BET method according to ISO 9277:2010. Furthermore, the above method is a cheap and simple production process, which provides the inventive catalytic system. Additionally, by the above method it is possible to provide a catalytic system wherein the platinum compound is prepared directly on the surface of the solid carrier and not before the immobilization of such a platinum compound on the surface of the solid carrier. Due to the direct preparation of the elemental platinum, platinum oxides and mixtures thereof on the surface of the solid carrier no further stabilizers like polymers are necessary. In addition, the inventors surprisingly found that by the above method it is possible to provide a catalytic system wherein the platinum compound is homogeneously distributed on the surface of the high surface area precipitated calcium carbonate (PCC).

As already set out above the inventive method for manufacturing the catalytic system comprising the platinum compound on a solid carrier comprises the steps of:

(a) providing at least one solid carrier, wherein the solid carrier is a precipitated calcium carbonate (PCC) and has a specific surface area of from 15 to 100 $m^2$/g measured using nitrogen and the BET method according to ISO 9277:2010;
(b) providing at least one platinum reagent comprising Pt ions, in such an amount that the amount of said ions is from 0.1 to 15 wt.-%, based on the dry weight of the solid carrier,
(c) contacting the at least one solid carrier provided in step (a) and the platinum reagent provided in step (b) to obtain a mixture comprising a solid carrier and a platinum reagent; and
(d) calcining the mixture of step (c) at a temperature between 200°C and 600°C for obtaining a catalytic system comprising a platinum oxide on the solid carrier.

According to another embodiment of the present invention the method for manufacturing the catalytic system comprising the platinum compound on a solid carrier comprises the steps of:

(a) providing at least one solid carrier, wherein the solid carrier is a precipitated calcium carbonate (PCC) and has a specific surface area of from 15 to 100 $m^2$/g measured using nitrogen and the BET method according to ISO 9277:2010;
(b) providing at least one platinum reagent comprising Pt ions, in such an amount that the amount of said ions is from 0.1 to 15 wt.-%, based on the dry weight of the solid carrier,
(c) contacting the at least one solid carrier provided in step (a) and the platinum reagent provided in step (b) to obtain a mixture comprising a solid carrier and a platinum reagent;
(d) calcining the mixture of step (c) at a temperature between 200°C and 600°C for obtaining a catalytic system comprising a platinum oxide on the solid carrier; and
(e) reducing the calcined catalytic system obtained from step (d) under $H_2$ atmosphere at a temperature between 100°C and 500°C for obtaining a catalytic system comprising elemental platinum, platinum oxides and mixtures thereof.

According to another embodiment of the present invention the method for manufacturing the catalytic system comprising the platinum compound on a solid carrier comprises the steps of:

(a) providing at least one solid carrier, wherein the solid carrier is a precipitated calcium carbonate (PCC) and has a specific surface area of from 15 to 100 $m^2$/g measured using nitrogen and the BET method according to ISO 9277:2010;
(b) providing at least one platinum reagent comprising Pt ions, in such an amount that the amount of said ions is from 0.1 to 15 wt.-%, based on the dry weight of the solid carrier,
(c) contacting the at least one solid carrier provided in step (a) and the platinum reagent provided in step (b) to obtain a mixture comprising a solid carrier and a platinum reagent;
(d) calcining the mixture of step (c) at a temperature between 200°C and 600°C for obtaining a catalytic system comprising a platinum oxide on the solid carrier;
(e) reducing the calcined catalytic system obtained from step (d) under $H_2$ atmosphere at a temperature between 100°C and 500°C for obtaining a catalytic system comprising elemental platinum, platinum oxides and mixtures thereof; and
(f) providing a solvent and contacting the at least one solid carrier provided in step (a) and/or the platinum reagent provided in step (b) before or during step (c) in any order and preferably the solvent is a non-polar solvent, a polar solvent or a mixture thereof, more preferably the non-polar solvent is selected from the group consisting of pentane, cyclopentane, hexane, cyclohexane, benzene, toluene, 1,4-dioxane, chloroform, diethyl ether, dichloromethane and mixtures thereof and/or the polar solvent is selected from the group consisting of tetrahydrofuran, ethyl acetate, acetone, dimethylformamide, acetonitrile, dimethyl sulphoxide, nitromethane, propylene carbonate, formic acid, n-butanol, isopropanol, n-propanol, ethanol, methanol, acetic acid, water and mixtures thereof even more preferably the solvent is a polar solvent and most preferably the solvent is water.

According to another embodiment of the present invention the method for manufacturing the catalytic system comprising the platinum compound on a solid carrier comprises the steps of:

(a) providing at least one solid carrier, wherein the solid carrier is a precipitated calcium carbonate (PCC) and has a specific surface area of from 15 to 100 $m^2$/g measured using nitrogen and the BET method according to ISO 9277:2010;
(b) providing at least one platinum reagent comprising Pt ions, in such an amount that the amount of said ions is from 0.1 to 15 wt.-%, based on the dry weight of the solid carrier,
(c) contacting the at least one solid carrier provided in step (a) and the platinum reagent provided in step (b) to obtain a mixture comprising a solid carrier and a platinum reagent;
(d) calcining the mixture of step (c) at a temperature between 200°C and 600°C for obtaining a catalytic system comprising a platinum oxide on the solid carrier;
(e) reducing the calcined catalytic system obtained from step (d) under $H_2$ atmosphere at a temperature between 100°C and 500°C for obtaining a catalytic system comprising elemental platinum, platinum oxides and mixtures thereof;
(f) providing a solvent and contacting the at least one solid carrier provided in step (a) and/or the platinum reagent provided in step (b) before or during step (c) in any order and preferably the solvent is a non-polar solvent, a polar solvent or a mixture thereof, more preferably the non-polar solvent is selected from the group consisting of pentane, cyclopentane, hexane, cyclohexane, benzene, toluene, 1,4-dioxane, chloroform, diethyl ether, dichloromethane and mixtures thereof and/or the polar solvent is selected from the group consisting of tetrahydrofuran, ethyl acetate, acetone, dimethylformamide, acetonitrile, dimethyl sulphoxide, nitromethane, propylene carbonate, formic acid, n-butanol, isopropanol, n-propanol, ethanol, methanol, acetic acid, water and mixtures thereof even more preferably the solvent is a polar solvent and most preferably the solvent is water; and
(g) removing at least part of the solvent after step (c) and before step (d) by evaporation and/or filtration and/or centrifugation and/or spray drying to obtain a concentrated mixture.

According to another embodiment of the present invention the method for manufacturing the catalytic system comprising the platinum compound on a solid carrier comprises the steps of:

(a) providing at least one solid carrier, wherein the solid carrier is a precipitated calcium carbonate (PCC) and has a specific surface area of from 15 to 100 $m^2$/g measured using nitrogen and the BET method according to ISO 9277:2010;
(b) providing at least one platinum reagent comprising Pt ions, in such an amount that the amount of said ions is from 0.1 to 15 wt.-%, based on the dry weight of the solid carrier,
(c) contacting the at least one solid carrier provided in step (a) and the platinum reagent provided in step (b) to obtain a mixture comprising a solid carrier and a platinum reagent;
(d) calcining the mixture of step (c) at a temperature between 200°C and 600°C for obtaining a catalytic system comprising a platinum oxide on the solid carrier;
(e) reducing the calcined catalytic system obtained from step (d) under $H_2$ atmosphere at a temperature between 100°C and 500°C for obtaining a catalytic system comprising elemental platinum, platinum oxides and mixtures thereof;
(f) providing a solvent and contacting the at least one solid carrier provided in step (a) and/or the platinum reagent provided in step (b) before or during step (c) in any order and preferably the solvent is a non-polar solvent, a polar solvent or a mixture thereof, more preferably the non-polar solvent is selected from the group consisting of pentane, cyclopentane, hexane, cyclohexane, benzene, toluene, 1,4-dioxane, chloroform, diethyl ether, dichloromethane and mixtures thereof and/or the polar solvent is selected from the group consisting of tetrahydrofuran, ethyl acetate, acetone, dimethylformamide, acetonitrile, dimethyl sulphoxide, nitromethane, propylene carbonate, formic acid, n-butanol, isopropanol, n-propanol, ethanol, methanol, acetic acid, water and mixtures thereof even more preferably the solvent is a polar solvent and most preferably the solvent is water;
(g) removing at least part of the solvent after step (c) and before step (d) by evaporation and/or filtration and/or centrifugation and/or spray drying to obtain a concentrated mixture; and
(h) of thermally treating the mixture of step (c) or the concentrated mixture of step (g) at a temperature between 25°C and 200°C, preferably at a temperature between 50°C and 180°C, and most preferably at a temperature between 100°C to 150°C.

**Further optional method steps**

The catalytic system obtained by the inventive method is a preferably a dry product and most preferably in the form of a powder, flakes, granules, particles, or aggregates.

The obtained catalytic system may optionally be further processed during a grinding step. In general, the grinding of the catalytic system may be performed in a dry or wet grinding process and may be carried out with any conventional grinding device, for example, under conditions such that comminution predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulverizer, a shredder, a de-clumper, a knife cutter, or other such equipment known to the skilled person.

In case the grinding is performed as a wet grinding process, the ground catalytic system may be dried afterwards. In general, the drying may take place using any suitable drying equipment and can, for example, include thermal heating and/or heating at reduced pressure using equipment such as an evaporator, a flash drier, an oven, a spray drier and/or drying in a vacuum chamber. The drying can be carried out at reduced pressure, ambient pressure or under increased pressure. Preferably, the drying is performed at ambient pressure.

The catalytic system obtained by the inventive method may be further alloyed with lead, which is colloquially sometimes referred to as "poisoning". Such a alloying is known to the skilled person, for example from the preparation of Lindlar catalyst. Without being bound to any theory, it is believed that the lead serves to deactivate the platinum sites, preventing formation of alkanes. Thus if a compound contains a triple bond, it is only reduced to a double bond. An example being the reduction of phenylacetylene to styrene.

According to one embodiment of the present invention the inventive method for manufacturing the catalytic system comprising the platinum compound on a solid carrier comprises the steps of:

(a) providing at least one solid carrier, wherein the solid carrier is a precipitated calcium carbonate (PCC) and has a specific surface area of from 15 to 100 $m^2/g$ measured using nitrogen and the BET method according to ISO 9277:2010;
(b) providing at least one platinum reagent comprising Pt ions, in such an amount that the amount of said ions is from 0.1 to 15 wt.-%, based on the dry weight of the solid carrier,
(b') providing at least one lead reagent comprising Pb ions, in such an amount that the amount of said ions is from 0.1 to 15 wt.-%, based on the dry weight of the solid carrier,
(c) contacting the at least one solid carrier provided in step (a) and the platinum reagent provided in step (b) to obtain a mixture comprising a solid carrier and a platinum reagent;
(d) calcining the mixture of step (c) at a temperature between 200°C and 600°C for obtaining a catalytic system comprising a platinum oxide on the solid carrier, and
(d') contacting the catalytic system of step (d) and the lead reagent provided in step (b') to obtain a catalytic system with Pb on the surface of the catalytic system.

The lead reagent used in step b') can be any lead reagent that is known to the skilled person. Preferably, the lead reagent is a water soluble lead reagent. According to a preferred embodiment, the lead reagent is $(CH_3COO)_2Pb$.

**The catalytic system**

By the inventive method an inventive catalytic system is obtained. The catalytic system according to the present invention comprises a platinum compound on a solid carrier, wherein

a) the solid carrier is a precipitated calcium carbonate (PCC) and has a specific surface area of from 15 to 100 $m^2/g$ measured using nitrogen and the BET method according to ISO 9277:2010; and
b) wherein the platinum compound is selected from the group consisting of elemental platinum, platinum oxides and mixtures thereof;

and wherein the content of the platinum species on the surface of the solid carrier is from 0.1 to 15 wt.-%, based on the dry weight of the solid carrier.

In general, the inventive catalytic system is composed of a particulate solid carrier material (precipitated calcium carbonate) and a platinum compound (elemental platinum and/or platinum oxides) present on at least part of the accessible surface of said carrier material. The platinum species is present on the surface of the solid carrier from 0.1 to 15 wt.-%, based on the dry weight of the solid carrier.

Specific embodiments of the solid carrier are already described hereinabove under step (a) of the inventive method and shall apply accordingly to the solid carrier and the platinum compound of the inventive catalytic system.

The solid carrier is precipitated calcium carbonate preferably having an aragonitic, vateritic or calcitic crystal form, and mixtures thereof.

According to one embodiment, the solid carrier has:

(i) a specific surface area in the range of from 20 to 90 $m^2/g$, preferably from 25 to 80 $m^2/g$, more preferably from 30 to 70 $m^2/g$, and most preferably from 35 to 60 $m^2/g$, measured using nitrogen and the BET method according to ISO 9277:2010; and/or

(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and/or

(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

According to another embodiment, the solid carrier has:

(i) a specific surface area in the range of from 20 to 90 $m^2/g$, preferably from 25 to 80 $m^2/g$, more preferably from 30 to 70 $m^2/g$, and most preferably from 35 to 60 $m^2/g$, measured using nitrogen and the BET method according to ISO 9277:2010; or

(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; or

(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

According to another embodiment, the solid carrier has:

(i) a specific surface area in the range of from 15 to 100 $m^2/g$ preferably from 20 to 90 $m^2/g$, preferably from 25 to 80 $m^2/g$, more preferably from 30 to 70 $m^2/g$, and most preferably from 35 to 60 $m^2/g$, measured using nitrogen and the BET method according to ISO 9277:2010; and

(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and

(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

Specific embodiments of the platinum compound are already described hereinabove under step (e) of the inventive method and shall apply accordingly to the solid carrier and the platinum compound of the inventive catalytic system.

According to one embodiment of the present invention, the platinum compound is selected from the group consisting of elemental platinum, PtO, $PtO_2$, $PtO_3$ and mixtures thereof, preferably is selected from the group consisting of elemental platinum, PtO, $PtO_2$ and mixtures thereof, and most preferably is elemental platinum.

According to another embodiment of the present invention, the content of the platinum species on the surface of the solid carrier is in the range of from 0.25 to 13 wt. %, preferably from 0.5 to 11 wt. %, more preferably 1.0 to 10.0 wt. %, even more preferably from 1.5 to 8.0 wt. % and most preferably from 2.0 to 7.0 wt. %, based on the dry weight of the solid carrier.

According to another embodiment of the present invention the catalytic system according to the present invention is in the form of a powder, flakes, granules, particles, or aggregates and preferably in the form of particles and has:

(i) a specific surface area in the range of from 15 to 80 $m^2/g$, preferably from 20 to 75 $m^2/g$, more preferably from 25 to 70 $m^2/g$, and most preferably from 35 to 60 $m^2/g$, measured using nitrogen and the BET method according to ISO 9277:2010; and/or

(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and/or

(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

According to another embodiment of the present invention the catalytic system according to the present invention is in the form of particles and has:

(i) a specific surface area in the range of from 15 to 80 $m^2/g$, preferably from 20 to 75 $m^2/g$, more preferably from 25 to 70 $m^2/g$, and most preferably from 35 to 60 $m^2/g$, measured using nitrogen and the BET method according to ISO 9277:2010; or

(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; or

(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

According to another embodiment of the present invention the catalytic system according to the present invention is in the form of particles and has:

(i) a specific surface area in the range of from 15 to 80 $m^2$/g, preferably from 20 to 75 $m^2$/g, more preferably from 25 to 70 $m^2$/g, and most preferably from 35 to 60 $m^2$/g, measured using nitrogen and the BET method according to ISO 9277:2010; and

(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and

(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

The inventors found that the catalytic system according to the present invention has several advantages. First of all, it has been found that the precipitated calcium carbonate according to the present invention is specifically useful as carrier material in catalysis. Especially, it has been found that in combination with the above-mentioned platinum compound, for example, higher catalytic activities, for example higher phenylacetylene transformation under hydrogen were achieved with the catalytic systems according to the present invention.

The catalytic system according to the present invention comprises a platinum compound on a solid carrier, wherein

a) the solid carrier is a precipitated calcium carbonate (PCC) and has a specific surface area of from 15 to 100 $m^2$/g measured using nitrogen and the BET method according to ISO 9277:2010; and

b) wherein the platinum compound is selected from the group consisting of elemental platinum, platinum oxides and mixtures thereof;

and wherein the content of the platinum species on the surface of the solid carrier is from 0.1 to 15 wt.-%, based on the dry weight of the solid carrier.

According to another embodiment of the present invention, the catalytic system according to the present invention comprises a platinum compound on a solid carrier, wherein

a) the solid carrier is a precipitated calcium carbonate (PCC) and has a specific surface area of from 15 to 100 $m^2$/g measured using nitrogen and the BET method according to ISO 9277:2010; and

b) wherein the platinum compound is selected from the group consisting of elemental platinum, platinum oxides and mixtures thereof;

and wherein the content of the platinum species on the surface of the solid carrier is from 0.25 to 13 wt. %, preferably from 0.5 to 11 wt. %, more preferably 1.0 to 10.0 wt. %, even more preferably from 1.5 to 8.0 wt. % and most preferably from 2.0 to 7.0 wt. %, based on the dry weight of the solid carrier.

According to another embodiment of the present invention, the catalytic system according to the present invention comprises a platinum compound on a solid carrier, wherein

a) the solid carrier is a precipitated calcium carbonate (PCC) and has a specific surface area of from 15 to 100 $m^2$/g measured using nitrogen and the BET method according to ISO 9277:2010; and

b) wherein the platinum compound is selected from the group consisting of elemental platinum, platinum oxides and mixtures thereof;

and wherein the content of the platinum species on the surface of the solid carrier is from 0.1 to 15 wt.-%, based on the dry weight of the solid carrier,

wherein the catalytic system is in the form of particles and has:

(i) a specific surface area in the range of from 15 to 80 $m^2$/g, preferably from 20 to 75 $m^2$/g, more preferably from 25 to 70 $m^2$/g, and most preferably from 35 to 60 $m^2$/g, measured using nitrogen and the BET method according to ISO 9277:2010; and

(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and

(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

According to another embodiment of the present invention, the catalytic system according to the present invention comprises a platinum compound on a solid carrier, wherein

a) the solid carrier is a precipitated calcium carbonate (PCC) and has a specific surface area of from 15 to 100 $m^2$/g measured using nitrogen and the BET method according to ISO 9277:2010; and

b) wherein the platinum compound is selected from the group consisting of elemental platinum, platinum oxides and mixtures thereof;

and wherein the content of the platinum species on the surface of the solid carrier is from 0.1 to 15 wt.-%, based on the dry weight of the solid carrier,

wherein the catalytic system is in the form of particles and has a specific surface area in the range of from 15 to 80 $m^2$/g, preferably from 20 to 75 $m^2$/g, more preferably from 25 to 70 $m^2$/g, and most preferably from 35 to 60 $m^2$/g, measured using nitrogen and the BET method according to ISO 9277:2010.

According to another embodiment, the catalytic system according to the present invention has an intra-particle intruded specific pore volume in the range from 0.001 to 2.3 $cm^3$/g, more preferably from 0.01 to 1.5 $cm^3$/g, especially preferably from 0.02 to 1.0 $cm^3$/g and most preferably from 0.02 to 0.5 $cm^3$/g, measured using the BJH method according to BS 4359-1:1996.

Additionally or alternatively, the intra-particle pore size of the catalytic system according to the present invention is in a range of from 0.004 to 1.6 $\mu$m, more preferably in a range of between 0.005 to 1.0 $\mu$m, especially preferably from 0.006 to 0.80 $\mu$m and most preferably of 0.007 to 0.50 $\mu$m, e.g., 0.010 to 0.10 $\mu$m, measured using the BJH method according to BS 4359-1:1996.

According to another embodiment of the present invention, the catalytic system according to the present invention comprises a platinum compound and a lead compound on a solid carrier, wherein

a) the solid carrier is a precipitated calcium carbonate (PCC) and has a specific surface area of from 15 to 100 $m^2$/g measured using nitrogen and the BET method according to ISO 9277:2010; and

b) wherein the platinum compound is selected from the group consisting of elemental platinum, platinum oxides and mixtures thereof;

b') wherein the lead compound is selected from the group consisting of elemental lead, lead oxides and mixtures thereof;

wherein the content of the platinum species on the surface of the solid carrier is from 0.1 to 15 wt.-%, based on the dry weight of the solid carrier; and

wherein the content of the lead species on the surface of the solid carrier is from 0.1 to 15 wt.-%, based on the dry weight of the solid carrier.

**Use of the inventive catalytic system in catalysis**

According to one aspect of the present invention a solid carrier as described hereinabove that is loaded with a platinum compound as described hereinabove is used as a catalyst.

The inventive catalytic system was found to be particularly useful in a number of catalytic reactions. For example, higher yields in phenylacetylene transformation under hydrogen allowed to obtain high yields of styrene known to be a starting materials for numerous products were achieved.

One aspect of the present invention therefore relates to the use of the inventive catalytic system in a process comprising the following steps:

(A) providing one or more reactants;

(B) providing the inventive catalytic system;

(C) subjecting the one or more reactants provided in step (A) to a chemical reaction in liquid or gas phase under $H_2$ atmosphere or a combination of inert atmosphere and $H_2$ atmosphere at a temperature between 50 and 300 °C in the presence of the catalytic system provided in step (B).

A preferred embodiment of the present invention relates to the use of the inventive catalytic system in a process according to the foregoing aspect, wherein said process further comprises step (D) of recovering the catalytic system following the chemical reaction of step (C) and optionally recycling the catalytic system following the chemical reaction of step (C).

In a preferred embodiment of the present invention, the chemical reaction in step (C) comprises heterogeneous catalysis. In a more preferred embodiment, the chemical reaction in step (C) may be selected from one or more of the following reaction types: alkene hydrogenations and alkyne hydrogenations. According to a preferred embodiment, the chemical reaction in step (C) is selected from one or more of alkyne hydrogenations.

The inventive catalytic system may also be used in form of different shapes such as granules, mouldings or extrudates comprising said catalytic system. Typical shapes include spheres, minispheres, monoliths, honeycombs, rings etc.

Granules are made by crushing and screening gels to obtain the desired size or by drying precipitated pastes together with binders. Optionally, the granulation process further includes heat treatment to achieve specific physical properties. The particle size of granules typically ranges from 40 $\mu$m up to 1 cm.

Mouldings are hollow forms having a particular shape obtained from something in a malleable state.

Extrudates are formed by pushing a paste through a die, cutting to length, drying and optional calcining.

The scope and interest of the invention may be better understood on basis of the following examples which are intended to illustrate embodiments of the present invention.

Figure 1 shows the performance evaluation for the catalytic transformation from phenylacetylene to styrene and ethylbenzene as well as the yield of styrene and ethylbenzene for the different Pt/PCC catalysts

Figure 2 shows the performance evaluation for the catalytic transformation from phenylacetylene to styrene and ethylbenzene as well as the yield of styrene and ethylbenzene for the different Pb-Pt/PCC catalysts

Figure 3 shows the styrene yield as a function of the BET surface area of the different Pt/PCC catalysts and Pb-Pt/PCC catalysts.

## EXPERIMENTAL SECTION

### 1. Measurement methods

The following measurement methods were used to evaluate the parameters given in the examples and claims.

### BET specific surface area (SSA) of a material

The BET specific surface area was measured via the BET process according to ISO 9277:2010 using nitrogen, following conditioning of the sample by heating at 250°C for a period of 30 minutes. Prior to such measurements, the sample was filtered, rinsed and dried at 110°C in an oven for at least 12 hours.

### Particle size distribution (weight % particles with a diameter < X), $d_{50}$ value (weight median grain diameter) and $d_{98}$ value of a particulate material:

The weight median grain diameter is determined by the sedimentation method, which is an analysis of sedimentation behaviour in a gravimetric field. The measurement is made with a Sedigraph™ 5120, Micromeritics Instrument Corporation. The method and the instrument are known to the skilled person and are commonly used to determine grain size of fillers and pigments. The measurement is carried out in an aqueous solution of 0.1 wt% $Na_4P_2O_7$. The samples were dispersed using a high speed stirrer and supersonicated.

The processes and instruments are known to the skilled person and are commonly used to determine grain size of fillers and pigments.

### Porosity / Pore volume / pore size

The porosity or pore volume and pore size was measured using the BJH method according to BS 4359-1:1996. Prior to such measurements, the sample was filtered, rinsed and dried at 110°C in an oven for at least 12 hours. **Correct?**

### 2. Material and equipment

### Materials and reagents

The following chemicals and materials were purchased in the highest purity grade available and used without further purification: Phenylacetylene (Alfa Aesar, 98+%), styrene (Alfa Aesar, 99%), ethylbenzene (Alfa Aesar, 99%), cyclohexane (Innochem, 99.5%), ethanol (Innochem, AR, 95%), mesitylene (Alfa Aesar,98+%), ethyl acetate (Sinopharm, AR), deuterated chloroform (Innochem, 99.8 atom % D), platinum chloride (Bide,97%), hydrochloric acid (Sinopharm, 37%), sodium formate (Macklin, 99.5%), lead acetate (Aladdin, 99%), 5wt% Pt/CaCO3 (BASF, AR),

The following precipitated calcium carbonate (PCC) was prepared and used:

PCC-04

A commercially available precipitated calcium carbonate, available from Omya International AG, Switzerland. PCC-04 is a scalenohedral PCC and has a specific surface area of 4.3 $m^2$/g.

PCC-21

A milk of lime was prepared by mixing under mechanical stirring calcium oxide with water for 15 - 30 minutes. The calcium oxide : water ratio was 1 : 5. Afterward 0,05 wt.% (active/dry) of sucrose (as a 64 wt.% solution) was added. The resulting milk of lime had a solids content of 13 wt.%, based on the total weight of the milk of lime.

The obtained milk of lime was transferred into a stainless steel reactor, wherein 0,02 wt.% (active/dry) of sucrose (as a 64 wt.% solution) was added. The temperature of the milk of lime was adjusted to 30°C. The milk of lime was carbonated by introducing an air/$CO_2$ mixture (20 vol-% $CO_2$). During the carbonation step, the reaction mixture was stirred with a speed of 1400 rpm. The kinetic of the reaction was monitored by online pH and conductivity measurements. The solids content of the obtained colloidal PCC was 16 wt.%, based on the total weight of the obtained colloidal PCC suspension.

The obtained colloidal PCC suspension was then dewatered by using a membrane filter press to obtain a filter cake with a solids content of 55 wt.%. Afterwards, the filter cake was then thermally dewatered by use of a flash drier to a dry product (solids content >97 wt.%). The obtained PCC has a specific surface area of 21.4 $m^2$/g.

PCC-30

A milk of lime was prepared by mixing under mechanical stirring calcium oxide with water for 15 - 30 minutes. The calcium oxide : water ratio was 1 : 5. Afterwards 0,04 wt.% (active/dry) of sucrose (as a 64 wt.% solution) was added. The resulting milk of lime had a solids content of 13 wt.%, based on the total weight of the milk of lime.

The obtained milk of lime was transferred into a stainless steel reactor and the temperature of the milk of lime was adjusted to 18°C. While the milk of lime was transferred, the solids content thereof was adjusted to 10 wt.% by adding water. The milk of lime was carbonated by introducing an air/$CO_2$ mixture (20 vol-% $CO_2$). During the carbonation step, the reaction mixture was stirred with a speed of 1400 rpm. The kinetic of the reaction was monitored by online pH and conductivity measurements. The solids content of the obtained colloidal PCC was 12 wt.%, based on the total weight of the obtained colloidal PCC suspension.

The obtained colloidal PCC suspension was then dewatered by using a membrane filter press to obtain a filter cake with a solids content of 55 wt.%. Afterwards, the filter cake was then thermally dewatered by use of a flash drier to a dry product (solids content >97 wt.%). The obtained PCC has a specific surface area of 30.7 $m^2$/g.

PCC-60

A commercially available precipitated calcium carbonate, available from Omya International AG, Switzerland. PCC-60 is a colloidal PCC and has a specific surface area of 60.6 $m^2$/g.

**Preparation of the catalytic system**

The preparation of the catalytic system is similar to the originally reported synthesis protocol by Lindlar et al. (Lindlar, H.; Dubuis, R. (1966). "Palladium Catalyst for Partial Reduction of Acetylenes". Organic Syntheses. 46: 89; Lindlar, H. (1 February 1952). "Ein neuer Katalysator für selektive Hydrierungen". Helvetica Chimica Acta. 35 (2): 446-450.)

In a first step, 0.23 mmol $PtCl_4$ was added into a 10 mL Erlenmeyer flask, followed by the addition of 0.2 mL of 37% hydrochloric acid. The flask was stirred at approximately 30 °C until the $PtCl_4$ was completely dissolved.

The obtained chloroplatinic acid solution was transferred to a 10 mL beaker filled with 2.5 mL of distilled water, where 3 mol/L aqueous sodium hydroxide solution has slowly been added to bring the pH of the solution to 4.0 - 4.5. Afterwards, 5.5 mL of the obtained solution was added into a 10 mL three-neck round bottom flask equipped with a thermometer, and partially immersed in a water bath. Then, 1 g of the respective PCC solid carrier was added, and the well-stirred suspension was heated to 75-85 °C and held at that temperature until all the Pt has precipitated; which takes approximately 15 min. While keeping the mixture at 75-85 °C, 330 μL of a HCOONa solution with a concentration of 0.7 mol/L was added and stirred for 40 min, then 250 μL HCOONa solution with a concentration of 0.7 mol/L was added and stirred for additional 40 min. Subsequently, the required amount of deionized water was added and centrifuged for several times, and finally, the resultant material was dried in an oven at 60°C overnight.

Catalytic systems that contain Pb have been prepared by the below protocol:

A 10 mL three-neck round bottom flask equipped with a thermometer and partially immersed in a water bath was used. The wet catalytic system obtained by the above described protocol before drying was placed in the 10 mL round bottom flask and was heated under stirring to a temperature of 85°C. Afterwards, 3.3 mL of deionized water and 1 mL of 7.7 wt.% $(CH_3COO)_2Pb$ solution were added and the resulting mixture was stirred for 40 min at 85°C. Finally, the obtained catalytic system was washed by centrifugation with the addition of deionized water and was dried in an oven at 60°C.

The obtained catalytic systems are described in the table below. All the catalytic systems comprise 5 wt. % of the platinum species on the surface of the solid carrier, based on the dry weight of the solid carrier:

| Materials | Surface area $(m^2/g)$[a] | Mean pore size (nm)[b] | Mean pore volume $(cm^3/g)$[b] |
|---|---|---|---|
| PCC-04 | 4.3 | 15.3 | 0.02 |
| PCC-21 | 21.4 | 20.8 | 0.13 |
| PCC-30 | 30.7 | 27.2 | 0.24 |
| PCC-60 | 60.6 | 18.1 | 0.32 |
| | | | |
| Pt-Pb/PCC-04[c] | 3.4 | 40.8[c] | 0.02 |
| Pt-Pb/PCC-21 [c] | 16.5 | 34.0 | 0.15 |
| Pt-Pb/PCC-30 [c] | 28.1 | 27.3 | 0.21 |
| Pt-Pb/PCC-60 [c] | 47.9 | 26.6 | 0.35 |
| Commercial Pt/CaCO$_3$[d] | 7.1 | 28.6 | 0.04 |

[a] Surface area ($S_{BET}$) was measured via the BET method according to ISO 9277:2010 using nitrogen.
[b] Determined by BJH method according to BS 4359-1:1996.
[c] BET was performed on post-Pb-impregnated materials.
[d] Unreduced.

**Catalytic investigations and results**

Catalytic hydrogenations were performed in a 250 mL Wattecs autoclave 110 μL of phenylacetylene (1 mmol), 5 mg catalytic system, and solvent (3 mL of cyclohexane) were added to the reactor. After purging 3 times with $H_2$, $H_2$ was filled to the 20 Bar at ambient temperature. The reaction temperature and the reaction time were kept according to the need under strong magnetic stirring. After the reaction, the batch reactor was cooled to room temperature, the products were separated from the catalyst by filtration. Mesitylene was added as an internal standard and then diluted with ethyl acetate. Finally, the collected sample solution was identified by a gas chromatograph-mass spectrometer combination (GCMS-QP2010 SE) and quantified by a gas chromatograph (GC-2014) with HPINNOWAX capillary column (30 m × 0.250 mm × 0.25 μm). The GC detecting conditions were as follows: nitrogen as carrier gas; injection port temperature: 350 °C; detector (FID) temperature: 300 °C; column temperature: 50 °C, heating to 250 °C with a heating rate of 6 °C/min. For some substrates, 1H NMR was used for the quantification or products were isolated for the quantification. Mesitylene was used as the internal standard to quantify the conversion and product yields. The experiments were repeated three times, and the data were the average value with the experimental error less than 1%.

Conv. (%) = [1- molar amount of phenylacetylene after reaction/ molar amount of Phenylacetylene in the starting material] × 100%

Yield (%) = molar amount of styrene product/ molar amount of phenylacetylene in the starting material × 100%

The obtained catalytic systems were evaluated in a catalytic transformation, using phenylacetylene as a starting molecule. Phenylacetylene chemical transformations were performed under hydrogen atmosphere at 20 bar, 55°C for 6 hours. The procedure was performed using a Wattecs Autoclave, which is an automated high-throughput reactor system. Phenylacetylene was transformed to styrene and ethylbenzene during the reaction.

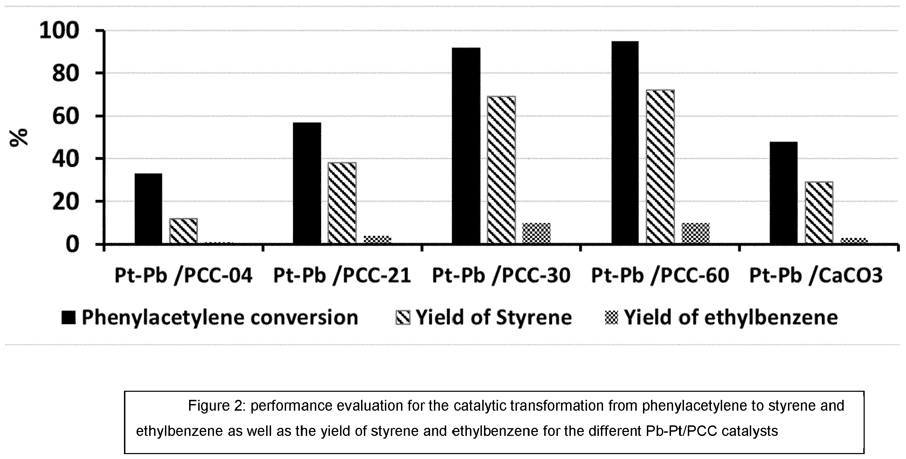

From figure 2 it can be seen that the inventive catalytic systems alloyed with Pb show an improved performance in the reaction from phenylacetylene to styrene, compared to prior art catalytic systems comprising low specific surface area PCC.

As can be seen from figure 2, Pt-Pb/PCC 21, Pt-Pb/PCC-30 and Pt-Pb/PCC-60 catalysts (i.e., high surface area) delivered conversions of about 60% to >90% and yields to styrene of about 40% to about 70%. In contrast, low-surface area catalysts (Pt-Pb/PCC-04) delivered only poor conversion and selectivity; while the full conversion was observed without Pb.

When Pb was externally added to the commercial $Pt/CaCO_3$ material, the relative selectivity towards styrene (29% yield with Pb vs no styrene without Pb) was increased, but the overall conversion was decreased drastically too (48% conversion with Pb vs 100% conversion without Pb). It essentially implies Pb has a detrimental impact on the catalytic active sites in low-surface area materials.

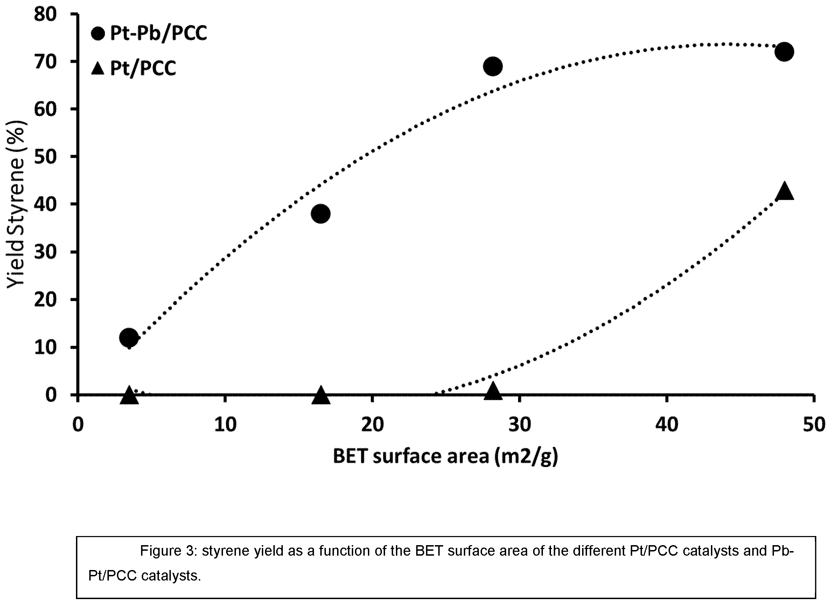

In figure 3 the yield of semi-hydrogenated styrene has been plotted as a function of specific surface area. With the increase of the specific surface area of PCC supports, the yield of styrene also increased gradually, indeed confirming the correlation.

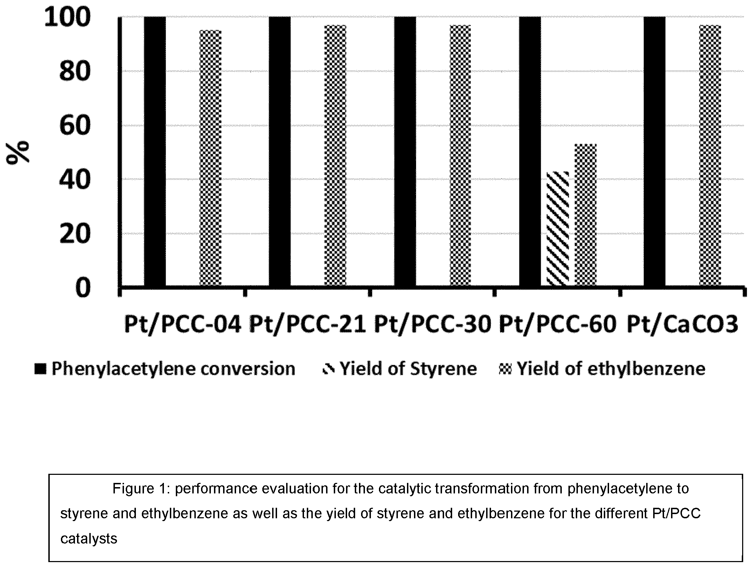

Furthermore, from figure 1 it can be seen that the inventive catalytic system leads to the fully hydrogenated ethylbenzene products. In case of Pt/PCC-60, it is even possible to obtain styrene without the addition of Pb.

**Claims**

1. A catalytic system comprising a platinum compound on a solid carrier, wherein

    a) the solid carrier is a precipitated calcium carbonate (PCC) and has a specific surface area of from 15 to 100 $m^2/g$ measured using nitrogen and the BET method according to ISO 9277:2010; and
    b) wherein the platinum compound is selected from the group consisting of elemental platinum, platinum oxides and mixtures thereof;
    and wherein the content of the platinum species on the surface of the solid carrier is from 0.1 to 15 wt.-%, based on the dry weight of the solid carrier.

2. The catalytic system according to claim 1, wherein the solid carrier has:

    (i) a specific surface area in the range of from 20 to 90 $m^2/g$, preferably from 25 to 80 $m^2/g$, more preferably from 30 to 70 $m^2/g$, and most preferably from 35 to 60 $m^2/g$, measured using nitrogen and the BET method according to ISO 9277:2010; and/or
    (ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and/or
    (iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

3. The catalytic system according to any of the preceding claims, wherein the platinum compound is selected from the group consisting of elemental platinum, PtO, $PtO_2$, $PtO_3$ and mixtures thereof, preferably is selected from the group consisting of elemental platinum, PtO, $PtO_2$ and mixtures thereof, and most preferably is elemental platinum.

4. The catalytic system according to any of the preceding claims, wherein the content of the platinum species on the surface of the solid carrier is in the range of from 0.25 to 13 wt. %, preferably from 0.5 to 11 wt. %, more preferably 1.0 to 10.0 wt. %, even more preferably from 1.5 to 8.0 wt. % and most preferably from 2.0 to 7.0 wt. %, based on the dry weight of the solid carrier.

5. The catalytic system according to any of the preceding claims, wherein the catalytic system is in the form of particles and has:

    (i) a specific surface area in the range of from 15 to 80 $m^2/g$, preferably from 20 to 75 $m^2/g$, more preferably from 25 to 70 $m^2/g$, and most preferably from 35 to 60 $m^2/g$, measured using nitrogen and the BET method according to ISO 9277:2010; and/or

(ii) a $d_{50}$(wt) in the range of from 1 to 75 $\mu$m, preferably from 2 to 50 $\mu$m, more preferably from 3 to 40 $\mu$m, even more preferably from 4 to 30 $\mu$m and most preferably from 5 to 15 $\mu$m; and/or

(iii) a $d_{98}$(wt) in the range of from 2 to 150 $\mu$m, preferably from 4 to 100 $\mu$m, more preferably from 6 to 80 $\mu$m, even more preferably from 8 to 60 $\mu$m and most preferably from 10 to 30 $\mu$m.

6. A method for manufacturing a catalytic system comprising a platinum compound on a solid carrier, the method comprising the following steps:

(a) providing at least one solid carrier, wherein the solid carrier is a precipitated calcium carbonate (PCC) and has a specific surface area of from 15 to 100 m$^2$/g measured using nitrogen and the BET method according to ISO 9277:2010;

(b) providing at least one platinum reagent comprising Pt ions, in such an amount that the amount of said ions is from 0.1 to 15 wt.-%, based on the dry weight of the solid carrier,

(c) contacting the at least one solid carrier provided in step (a) and the platinum reagent provided in step (b) to obtain a mixture comprising a solid carrier and a platinum reagent; and

(d) calcining the mixture of step (c) at a temperature between 200°C and 600°C for obtaining a catalytic system comprising a platinum oxide on the solid carrier.

7. The method according to claim 6, wherein the method further comprises step (e) of reducing the calcined catalytic system obtained from step (d) under H$_2$ atmosphere at a temperature between 100°C and 500°C for obtaining a catalytic system comprising elemental platinum, platinum oxides and mixtures thereof.

8. The method according to claims 6 to 7, wherein the calcining step (d) is performed

(i) under air, N$_2$ atmosphere, Ar atmosphere, O$_2$ atmosphere or mixtures thereof and/or

(ii) at a temperature between 270°C and 480°C, preferably at a temperature between 300°C and 450°C, and most preferably at a temperature between 330°C and 400°C.

9. The method according to claims 6 to 8, wherein the method further comprises step (f) of providing a solvent and contacting the at least one solid carrier provided in step (a) and/or the platinum reagent provided in step (b) before or during step (c) in any order and preferably the solvent is a non-polar solvent, a polar solvent or a mixture thereof, more preferably the non-polar solvent is selected from the group consisting of pentane, cyclopentane, hexane, cyclohexane, benzene, toluene, 1,4-dioxane, chloroform, diethyl ether, dichloromethane and mixtures thereof and/or the polar solvent is selected from the group consisting of tetrahydrofuran, ethyl acetate, acetone, dimethylformamide, acetonitrile, dimethyl sulphoxide, nitromethane, propylene carbonate, formic acid, n-butanol, isopropanol, n-propanol, ethanol, methanol, acetic acid, water and mixtures thereof even more preferably the solvent is a polar solvent and most preferably the solvent is water.

10. The method according to claim 9, wherein the method further comprises step (g) of removing at least part of the solvent after step (c) and before step (d) by evaporation and/or filtration and/or centrifugation and/or spray drying to obtain a concentrated mixture.

11. The method according to any of claims 9 to 10, wherein the method further comprises step (h) of thermally treating the mixture of step (c) or the concentrated mixture of step (g) at a temperature between 25°C and 200°C, preferably at a temperature between 50°C and 180°C, and most preferably at a temperature between 100°C to 150°C.

12. The method according to any of claims 6 to 11, wherein the platinum reagent is selected from the group consisting of KPt(NH$_3$)Cl$_3$, Pt(NH$_3$)$_2$Cl$_2$, K[(H$_2$C=CH$_2$)PtCl$_3$]·xH$_2$O, Na$_2$PtCl$_6$, Pt(acac)$_2$, Na$_2$PtCl$_4$, H$_2$PtCl$_6$, (NH$_4$)2[PtCl$_6$], PtCl$_4$, Pt(NO$_3$)$_4$, and mixtures thereof, preferably from the group consisting of Na$_2$PtCl$_6$, Pt(acac)$_2$, Na$_2$PtCl$_4$, H$_2$PtCl$_6$, (NH$_4$)2[PtCl$_6$], PtCl$_4$, Pt(NO$_3$)$_4$, and mixtures thereof, and most preferably is selected from PtCl$_4$, Pt(NO$_3$)$_4$, and mixtures thereof.

13. Use of a catalytic system according to any of claims 1 to 5 in a process comprising the following steps:

(A) providing one or more reactants;

(B) providing said catalytic system according to any of claims 1 to 5;

(C) subjecting the one or more reactants provided in step (A) to a chemical reaction in liquid or gas phase under H$_2$ atmosphere, or a combination of inert atmosphere and H$_2$ atmosphere at a temperature between 50 and 300 °C in the presence of the catalytic system provided in step (B).

14. The use according to claim 13, wherein the process further comprises step (D) of recovering and optionally recycling the catalytic system following the chemical reaction of step (C).

15. The use according to claims 13 or 14, wherein the chemical reaction in step (C) is selected from one or more of alkene hydrogenations, and alkyne hydrogenations and preferably is selected from one or more of alkyne hydrogenations.

16. Use of a solid carrier as defined in any of claims 1, 2 or 5 loaded with a platinum compound as defined in claims 1, 3, 4 and 5 as a catalyst.

17. Granules, mouldings or extrudates comprising a catalytic system according to any of claims 1 to 5.

Figure 1: performance evaluation for the catalytic transformation from phenylacetylene to styrene and ethylbenzene as well as the yield of styrene and ethylbenzene for the different Pt/PCC catalysts

EP 4 306 210 A1

Figure 2: performance evaluation for the catalytic transformation from phenylacetylene to styrene and ethylbenzene as well as the yield of styrene and ethylbenzene for the different Pb-Pt/PCC catalysts

Figure 3: styrene yield as a function of the BET surface area of the different Pt/PCC catalysts and Pb-Pt/PCC catalysts.

## EP 4 306 210 A1

## EUROPEAN SEARCH REPORT

**Application Number**

EP 22 18 4534

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2021/058508 A1 (OMYA INT AG [CH]) 1 April 2021 (2021-04-01) * 2. Material and equipment 3. Example Data; claims; tables * | 1-17 | INV. B01J21/18 B01J23/02 B01J23/62 B01J35/02 B01J35/10 |
| X | US 2019/262807 A1 (GANE PATRICK A C [CH] ET AL) 29 August 2019 (2019-08-29) * paragraphs [0268] – [0296]; claims; examples; tables * | 1-17 | B01J37/03 B01J37/08 B01J37/12 B01J37/14 B01J37/16 |
| X | US 5 856 578 A (SIEGRIST URS [CH] ET AL) 5 January 1999 (1999-01-05) * claims; examples; tables; compounds * | 1-17 | B01J37/18 |
| X | BLASER H-U ET AL: "The role of catalysis for the clean production of fine chemicals", APPLIED CATALYSIS A: GENERAL, ELSEVIER, AMSTERDAM, NL, vol. 189, no. 2, 6 December 1999 (1999-12-06), pages 191-204, XP004272056, ISSN: 0926-860X, DOI: 10.1016/S0926-860X(99)00276-8 * 3.1.1 Development of the new catalytic systems 3.1.2 Scope of the new systems 3.2 Lowering of hydroxylamine accumulation in the hydrogenation of aromatic nitro groups; tables * | 1-5, 13-17 | |

-/--

TECHNICAL FIELDS SEARCHED (IPC)

B01J

The present search report has been drawn up for all claims

| Place of search | Date of completion of the search | Examiner |
|---|---|---|
| Munich | 16 December 2022 | de Cauwer, Robby |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**page 1 of 2**

Europäisches
Patentamt

European
Patent Office

Office européen
des brevets

**EUROPEAN SEARCH REPORT**

Application Number

EP 22 18 4534

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Roger Arthur Sheldon ET AL: "8 Catalytic Hydrogenation and Dehydrogenation 8.1 Alkynes" In: "Fine Chemicals through Heterogeneous Catalysis", 20 December 2000 (2000-12-20), Wiley-VCH Verlag GmbH, Weinheim, Germany, XP055198635, ISBN: 978-3-52-729951-5 pages 351-471, DOI: 10.1002/9783527612963, * pages 399-403 * | 1-5, 13-17 | |
| | ----- | | |
| A | US 2015/165431 A1 (BONRATH WERNER [CH] ET AL) 18 June 2015 (2015-06-18) * the whole document * | 1-17 | |
| | ----- | | |

TECHNICAL FIELDS
SEARCHED      (IPC)

The present search report has been drawn up for all claims

| Place of search | Date of completion of the search | Examiner |
|---|---|---|
| Munich | 16 December 2022 | de Cauwer, Robby |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 18 4534

16-12-2022

| Patent document cited in search report | | Publication date | Patent family member(s) | | Publication date |
|---|---|---|---|---|---|
| WO 2021058508 | A1 | 01-04-2021 | BR 112022005125 | A2 | 21-06-2022 |
| | | | CA 3150148 | A1 | 01-04-2021 |
| | | | CN 114450085 | A | 06-05-2022 |
| | | | EP 4034297 | A1 | 03-08-2022 |
| | | | JP 2022549645 | A | 28-11-2022 |
| | | | KR 20220069988 | A | 27-05-2022 |
| | | | WO 2021058508 | A1 | 01-04-2021 |
| US 2019262807 | A1 | 29-08-2019 | AU 2017304362 | A1 | 03-01-2019 |
| | | | BR 112019001472 | A2 | 07-05-2019 |
| | | | CA 3030065 | A1 | 01-02-2018 |
| | | | CN 109475849 | A | 15-03-2019 |
| | | | EP 3275537 | A1 | 31-01-2018 |
| | | | EP 3487619 | A1 | 29-05-2019 |
| | | | JP 6979056 | B2 | 08-12-2021 |
| | | | JP 2019523127 | A | 22-08-2019 |
| | | | KR 20190033583 | A | 29-03-2019 |
| | | | RU 2019104891 | A | 25-08-2020 |
| | | | US 2019262807 | A1 | 29-08-2019 |
| | | | WO 2018019630 | A1 | 01-02-2018 |
| US 5856578 | A | 05-01-1999 | AT 188206 | T | 15-01-2000 |
| | | | AU 2564795 | A | 21-12-1995 |
| | | | CA 2187922 | A1 | 07-12-1995 |
| | | | CN 1149287 | A | 07-05-1997 |
| | | | DE 69514223 | T2 | 07-09-2000 |
| | | | EP 0763011 | A1 | 19-03-1997 |
| | | | ES 2142481 | T3 | 16-04-2000 |
| | | | IL 113848 | A | 29-06-2000 |
| | | | JP H10500940 | A | 27-01-1998 |
| | | | PL 317204 | A1 | 17-03-1997 |
| | | | US 5856578 | A | 05-01-1999 |
| | | | UY 23968 | A1 | 23-11-1995 |
| | | | WO 9532941 | A1 | 07-12-1995 |
| | | | ZA 954326 | B | 27-11-1995 |
| US 2015165431 | A1 | 18-06-2015 | CN 104394988 | A | 04-03-2015 |
| | | | EA 201500030 | A1 | 30-04-2015 |
| | | | EP 2864045 | A1 | 29-04-2015 |
| | | | JP 6279564 | B2 | 14-02-2018 |
| | | | JP 2015526276 | A | 10-09-2015 |
| | | | KR 20150023423 | A | 05-03-2015 |
| | | | US 2015165431 | A1 | 18-06-2015 |
| | | | WO 2013190076 | A1 | 27-12-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 2704345 A1
- WO 2021058508 A1
- WO 2004030813 A1
- WO 2013190076 A1
- EP 2447213 A1
- EP 2524898 A1
- EP 2371766 A1
- EP 2840065 A1
- WO 2013142473 A1

### Non-patent literature cited in the description

- The Catalyst Technical Handbook. Johnson Matthey Co, 2005
- **LINDLAR, H. ; DUBUIS, R.** Palladium Catalyst for Partial Reduction of Acetylenes. *Organic Syntheses.,* 1966, vol. 46, 89
- **LINDLAR, H.** Ein neuer Katalysator für selektive Hydrierungen. *Helvetica Chimica Acta.,* 01 February 1952, vol. 35 (2), 446-450